# EUROPEAN PATENT APPLICATION

(11) **EP 4 697 234 A1**
(43) Date of publication of application: **18.02.2026**
(21) Application number: 24788773.0
(22) Date of filing: 10.04.2024
(51) Int. Cl.: G06N 3/008, A63H 11/00, B25J 13/00, G06F 3/01, G06F 3/16, G06F 3/04817, G10L 13/00, G10L 13/08, G10L 15/22, G10L 25/63

(54) **ACTION CONTROL SYSTEM, METHOD FOR GENERATING LEARNING DATA, DISPLAY CONTROL DEVICE, AND PROGRAM**

(30) Priority: 11.04.2023 JP 2023064439; 30.05.2023 JP 2023089076; 14.11.2023 JP 2023193948; 21.11.2023 JP 2023197482
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2024/014590
(87) International publication number: WO 2024/214750

(57) **Abstract**

This action control system includes: an emotion determination unit that determines the emotion of a user or the emotion of an electronic device; and an action determination unit that determines an action of the electronic device using the emotion of the user or the emotion of the electronic device and an action determination model. The emotion determination unit determines the emotion of the user or the emotion of the electronic device according to a predetermined mapping.

## Description

### Technical Field

The present disclosure relates to an action control system, a method for generating learning data, a display control device, and a program.

### Background Art

Japanese Patent No. 6053847 discloses a technique for determining an appropriate action of a robot with respect to a state of a user. In the conventional technique of Japanese Patent No. 6053847, a reaction of a user when the robot executes a specific action is recognized, and in a case where an action of the robot with respect to the recognized reaction of the user cannot be determined, the action of the robot is updated by receiving information regarding the action suitable for the recognized state of the user from a server.

### SUMMARY OF INVENTION

### Technical Problem

However, in the related art, there is room for improvement in causing the robot to execute an appropriate action for the behavior of the user.

### Solution to Problem

According to a first aspect of the present disclosure, an action control system is provided. The action control system includes: an emotion determination unit that determines an emotion of a user or an emotion of an electronic device; and an action determination unit that determines an action of the electronic device using the emotion of the user or the emotion of the electronic device and an action determination model, wherein the emotion determination unit determines the emotion of the user or the emotion of the electronic device according to predetermined mapping.

The electronic device may be a robot. Here, the robot includes a device that performs a physical operation, a device that outputs a video or a voice without performing a physical operation, and an agent that operates on software.

### BRIEF DESCRIPTION OF DRAWINGS

Fig. 1 schematically illustrates an example of a system 5 according to a first embodiment.
Fig. 2 schematically illustrates a functional configuration of a robot 100 according to the first embodiment.
Fig. 3 schematically illustrates an example of an operation flow of collection processing by the robot 100 according to the first embodiment.
Fig. 4A schematically illustrates an example of an operation flow of response processing by the robot 100 according to the first embodiment.
Fig. 4B schematically illustrates an example of an operation flow of autonomous processing by the robot 100 according to the first embodiment.
Fig. 4C schematically illustrates an example of an operation flow of backchanneling processing by the robot 100 according to the first embodiment.
Fig. 5 illustrates an emotion map 400 on which a plurality of emotions are mapped.
Fig. 6 illustrates an emotion map 900 on which a plurality of emotions are mapped.
Fig. 7A is an external view of a stuffed toy 100N according to a second embodiment.
Fig. 7B is an internal structural view of the stuffed toy 100N.
Fig. 8 is a rear front view of the stuffed toy 100N according to the second embodiment.
Fig. 9 schematically illustrates a functional configuration of the stuffed toy 100N according to the second embodiment.
Fig. 10 schematically illustrates a functional configuration of an agent system 500 according to a third embodiment.
Fig. 11 illustrates an example of an operation of the agent system.
Fig. 12 illustrates an example of an operation of the agent system.
Fig. 13 schematically illustrates a functional configuration of smart glasses 700 according to a fourth embodiment.
Fig. 14 illustrates an example of a usage mode of an agent system using smart glasses.
Fig. 15 schematically illustrates an example of a hardware configuration of a computer 1200.
Fig. 16 schematically illustrates a functional configuration of a robot 100A according to a modification of the first embodiment.
Fig. 17 illustrates a state in which a plurality of pieces of position information is plotted on the emotion map 400 illustrated in Fig. 5.
Fig. 18 schematically illustrates an example of a hardware configuration of a display control device 800 according to a fifth embodiment.
Fig. 19 schematically illustrates an example of a storage device 1224 according to the fifth embodiment.
Fig. 20 schematically illustrates a functional configuration of a display control device 800 according to the fifth embodiment.
Fig. 21 schematically illustrates an example of an operation flow of transition display processing by the display control device 800 according to the fifth embodiment.
Fig. 22A illustrates an example of screen display according to the fifth embodiment.
Fig. 22B illustrates an example of screen display according to the fifth embodiment.
Fig. 22C illustrates an example of screen display according to the fifth embodiment.
Fig. 23 schematically illustrates an example of an operation flow of advice display processing by the display control device 800 according to the fifth embodiment.
Fig. 24 illustrates an example of screen display according to the fifth embodiment.
Fig. 25 illustrates an example of screen display according to a modification of the fifth embodiment.
Fig. 26 schematically illustrates an example of an operation flow of advice display processing by the display control device 800 according to a modification of the fifth embodiment.
Fig. 27 illustrates an example of screen display according to a modification of the fifth embodiment.

### DESCRIPTION OF EMBODIMENTS

This application is based on Japanese Patent Application No. 2023-064439 on April 11, 2023, Japanese Patent Application No. 2023-089076 filed on May 30, 2023, Japanese Patent Application No. 2023-193948 filed on November 14, 2023, and Japanese Patent Application No. 2023-197482 filed on November 21, 2023 filed in Japan, the contents of which form a part thereof as the contents of this application.

The present disclosure will also be more fully understood by the following detailed description. Further scope of application of the present application will be apparent from the following detailed description. However, the detailed description and the specific illustrative examples are preferred embodiments of the present disclosure and are described for purposes of explanation only. From this detailed description, various changes and modifications will be apparent to those skilled in the art within the spirit and scope of the present disclosure.

The applicant does not intend to present any of the described embodiments to the public, and among the disclosed modifications and alternatives, modifications and alternatives that are not necessarily included in the scope of the claims are also included in the invention under the doctrine of equivalents.

Like reference numerals and names in the various drawings indicate like elements.

Hereinafter, the disclosure will be described through embodiments of the invention, but the following embodiments do not limit the disclosure according to the claims. In addition, not all combinations of features described in the embodiments are essential to the disclosed solutions.

### [First Embodiment]

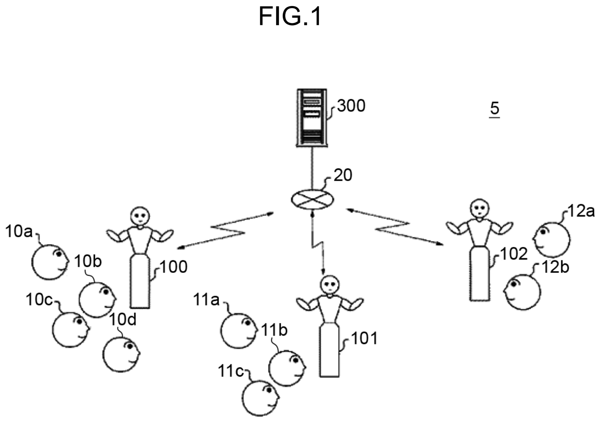

Fig. 1 schematically illustrates an example of a system 5 according to the present embodiment. The system 5 includes a robot 100, a robot 101, a robot 102, and a server 300. The user 10a, the user 10b, the user 10c, and the user 10d are users of the robot 100. The user 11a, the user 11b, and the user 11c are users of the robot 101. The user 12a and the user 12b are users of the robot 102. Note that, in the description of the present embodiment, the user 10a, the user 10b, the user 10c, and the user 10d may be collectively referred to as a user 10. Furthermore, the user 11a, the user 11b, and the user 11c may be collectively referred to as a user 11. Furthermore, the user 12a and the user 12b may be collectively referred to as a user 12. The robot 101 and the robot 102 have substantially the same functions as those of the robot 100. Therefore, the system 5 will be described mainly focusing on the function of the robot 100.

The robot 100 has a conversation with the user 10 and provides a video to the user 10. At this time, the robot 100 provides a conversation with the user 10, a video to the user 10, and the like in cooperation with the server 300 and the like that can communicate via a communication network 20. For example, the robot 100 not only learns an appropriate conversation by itself, but also performs learning so that the conversation with the user 10 can be advanced more appropriately in cooperation with the server 300. Furthermore, the robot 100 causes the server 300 to record captured video data and the like of the user 10, requests the server 300 to transmit the video data and the like as necessary, and provides the video data and the like to the user 10.

Furthermore, the robot 100 has an emotion value indicating the type of its own emotion. For example, the robot 100 has emotion values indicating the strength of each emotion of "joy", "anger", "sorrow", "cheerful", "pleasant", "unpleasant", "relief", "anxiety", "sadness", "excitement", "worried", "relieved", "sense of fulfillment", "sense of emptiness", and "neutral". For example, when the robot 100 has a conversation with the user 10 in a state where the emotion value of excitement is large, the robot emits a voice at a fast speed. As described above, the robot 100 can express its own emotion by action.

Furthermore, the robot 100 may be configured to determine the action of the robot 100 corresponding to the emotion of the user 10 by matching a sentence generation model using artificial intelligence (AI) with an emotion engine. Specifically, the robot 100 may be configured to recognize a behavior of the user 10, determine an emotion of the user 10 for the behavior of the user, and determine an action of the robot 100 corresponding to the determined emotion.

More specifically, in a case where the robot 100 recognizes the behavior of the user 10, the robot 100 automatically generates the action content to be taken by the robot 100 with respect to the behavior of the user 10 using a preset sentence generation model. The sentence generation model may be interpreted as an algorithm and an operation for automatic interaction processing with characters. The sentence generation model is publicly known, for example, as disclosed in Japanese Patent Application Laid-Open (JP-A) No. 2018-081444 or ChatGPT (Internet search <URL: https://openai.com/blog/chatgpt>). Therefore, a detailed description thereof will be omitted. Such a sentence generation model is configured by a large language model (LLM).

As described above, in the present embodiment, it is possible to reflect the emotions of the user 10 and the robot 100 and various linguistic information in the action of the robot 100 by combining the large language model and the emotion engine. That is, according to the present embodiment, a synergistic effect can be obtained by combining the sentence generation model and the emotion engine.

Furthermore, the robot 100 has a function of recognizing a behavior of the user 10. The robot 100 recognizes the behavior of the user 10 by analyzing the face image of the user 10 acquired by the camera function and the voice of the user 10 acquired by the microphone function. The robot 100 determines an action to be executed by the robot 100 on the basis of the recognized behavior of the user 10 or the like.

As an example of an action determination model, the robot 100 stores a rule defining an action to be executed by the robot 100 on the basis of the emotion of the user 10, the emotion of the robot 100, and the behavior of the user 10, and performs various actions according to the rule.

Specifically, the robot 100 includes, as an example of the action determination model, a reaction rule for determining an action of the robot 100 on the basis of the emotion of the user 10, the emotion of the robot 100, and the behavior of the user 10. In the reaction rule, for example, an action of "laughing" is set as the action of the robot 100 in response to a case where the behavior of the user 10 is "laughing". Furthermore, in the reaction rule, an action of "apologize" is defined as an action of the robot 100 in response to a case where the behavior of the user 10 is "angry". Furthermore, in the reaction rule, an action of "answering" is defined as an action of the robot 100 in response to a case where the behavior of the user 10 is "ask". In the reaction rule, an action of "calling out is defined as an action of the robot 100 in response to a case where the behavior of the user 10 is "sad".

In a case where the robot 100 recognizes that the behavior of the user 10 is "angry" on the basis of the reaction rule, the robot selects an action of "apologize" defined in the reaction rule as the action to be executed by the robot 100. For example, when selecting the action of "apologize", the robot 100 performs an action of "apologize" and outputs a voice expressing a word of "apologize".

Furthermore, in a case where a condition that the emotion of the robot 100 is "neutral" (that is, "joy"=0, "anger"=0, "sorrow"=0, and "cheerful"=0) and the state of the user 10 is "the user is alone and looks lonely" is satisfied, it is defined that the change content of the emotion that the emotion of the robot 100 is "worried" and the action of "calling out" can be executed.

In a case where the robot 100 recognizes that the current emotion of the robot 100 is "neutral" and the user 10 is alone and in a state of feeling lonely on the basis of the reaction rule, the emotion value of "sorrow" of the robot 100 is increased. Furthermore, the robot 100 selects an action of "calling out" defined in the reaction rule as an action to be executed on the user 10. For example, in a case where the action of "calling out" is selected, the robot 100 converts a word "Are you okay?" indicating that the robot is worried into a voice indicating that the robot is worried, and outputs the voice.

Furthermore, the robot 100 transmits, to the server 300, user reaction information indicating that a positive reaction has been obtained from the user 10 by this action. The user reaction information includes, for example, a user behavior of "angry", an action of the robot 100 of "apologize", a positive reaction of the user 10, and an attribute of the user 10.

The server 300 stores the user reaction information received from the robot 100. Note that the server 300 receives and stores the user reaction information not only from the robot 100 but also from each of the robot 101 and the robot 102. Then, the server 300 analyzes the user reaction information from the robot 100, the robot 101, and the robot 102, and updates the reaction rule.

The robot 100 receives the updated reaction rule from the server 300 by inquiring the server 300 about the updated reaction rule. The robot 100 incorporates the updated reaction rule into the reaction rule stored in the robot 100. As a result, the robot 100 can incorporate the reaction rule acquired by the robot 101, the robot 102, or the like into its own reaction rule.

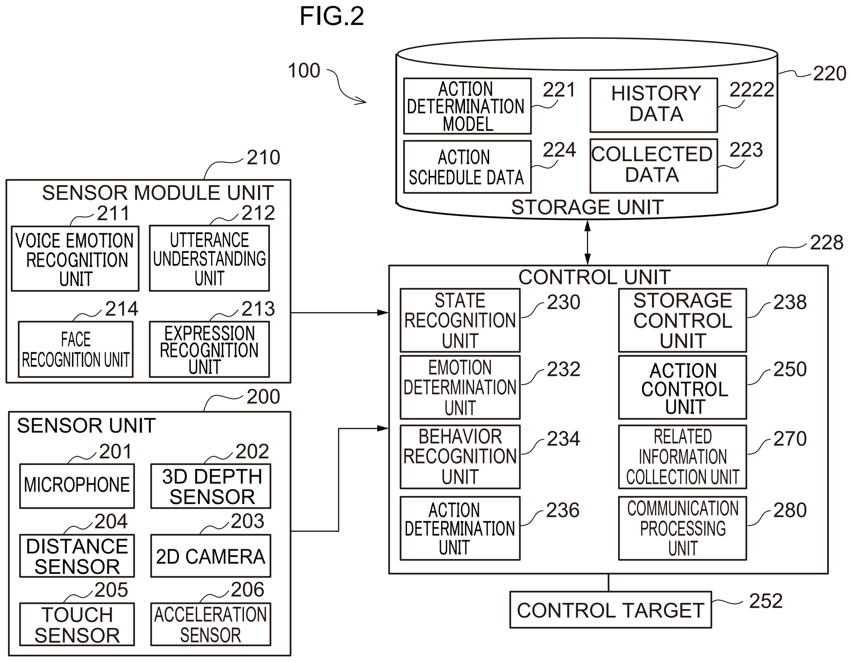

Fig. 2 schematically illustrates a functional configuration of the robot 100. The robot 100 includes a sensor unit 200, a sensor module unit 210, a storage unit 220, a control unit 228, and a control target 252. The control unit 228 includes a state recognition unit 230, an emotion determination unit 232, a behavior recognition unit 234, an action determination unit 236, a storage control unit 238, an action control unit 250, a related information collection unit 270, and a communication processing unit 280.

The control target 252 includes a display device, a speaker, an LED of an eye portion, a motor that drives an arm, a hand, a foot, and the like, and the like. The posture and gesture of the robot 100 are controlled by controlling motors for arms, hands, and feet. Some of the emotions of the robot 100 can be expressed by controlling these motors. Furthermore, the expression of the robot 100 can be expressed by controlling the light emission state of the LED of the eye portion of the robot 100. Note that the posture, gesture, and expression of the robot 100 are examples of the attitude of the robot 100.

The sensor unit 200 includes a microphone 201, a 3D depth sensor 202, a 2D camera 203, a distance sensor 204, a touch sensor 205, and an acceleration sensor 206. The microphone 201 continuously detects a voice and outputs voice data. Note that the microphone 201 may be provided on the head of the robot 100 and may have a function of performing binaural recording. The 3D depth sensor 202 detects the contour of the object by continuously irradiating the infrared pattern and analyzing the infrared pattern from the infrared image continuously captured by the infrared camera. The 2D camera 203 is an example of an image sensor. The 2D camera 203 captures an image with visible light and generates video information of visible light. The distance sensor 204 detects a distance to an object by emitting, for example, a laser, an ultrasonic wave, or the like. Note that the sensor unit 200 may further include a clock, a gyro sensor, a sensor for motor feedback, and the like.

Note that, among the components of the robot 100 illustrated in Fig. 2, the components other than the control target 252 and the sensor unit 200 are examples of the components included in the action control system included in the robot 100. The action control system of the robot 100 controls the control target 252.

The storage unit 220 includes an action determination model 221, history data 222, collected data 223, and action schedule data 224. The history data 222 includes past emotion values of the user 10, past emotion values of the robot 100, and a behavior history, and specifically includes a plurality of pieces of event data including the emotion values of the user 10, the emotion values of the robot 100, and the behavior of the user 10. The data including the behavior of the user 10 includes a camera image representing the behavior of the user 10. The emotion value and the behavior history are recorded for each user 10 by being associated with identification information of the user 10, for example. At least a part of the storage unit 220 is implemented by a storage medium such as a memory. A person DB that stores a face image of the user 10, attribute information of the user 10, and the like may be included. Note that, among the components of the robot 100 illustrated in Fig. 2, the functions of the components other than the control target 252, the sensor unit 200, and the storage unit 220 can be realized by the CPU operating on the basis of a program. For example, the functions of these components can be implemented as the operation of the CPU by basic software (OS) and a program operating on the OS.

The sensor module unit 210 includes a voice emotion recognition unit 211, an utterance understanding unit 212, an expression recognition unit 213, and a face recognition unit 214. Information detected by the sensor unit 200 is input to the sensor module unit 210. The sensor module unit 210 analyzes information detected by the sensor unit 200 and outputs an analysis result to the state recognition unit 230.

The voice emotion recognition unit 211 of the sensor module unit 210 analyzes the voice of the user 10 detected by the microphone 201 to recognize the emotion of the user 10. For example, the voice emotion recognition unit 211 extracts a feature amount such as a frequency component of speech and recognizes the emotion of the user 10 on the basis of the extracted feature amount. The utterance understanding unit 212 analyzes the voice of the user 10 detected by the microphone 201 and outputs character information indicating the utterance content of the user 10.

The expression recognition unit 213 recognizes the expression of the user 10 and the emotion of the user 10 from the image of the user 10 captured by the 2D camera 203. For example, the expression recognition unit 213 recognizes the expression and emotion of the user 10 on the basis of the shapes, positional relationships, and the like of the eyes and the mouth.

The face recognition unit 214 recognizes the face of the user 10. The face recognition unit 214 recognizes the user 10 by matching a face image stored in a person DB (not illustrated) with a face image of the user 10 captured by the 2D camera 203.

The state recognition unit 230 recognizes the state of the user 10 on the basis of the information analyzed by the sensor module unit 210. For example, processing mainly related to perception is performed using the analysis result of the sensor module unit 210. For example, perception information such as "Dad is alone." and "The probability that dad is not smiling is 90%." is generated. Processing of understanding the meaning of the generated perception information is performed. For example, semantic information such as "Dad is alone and looks lonely." is generated.

The state recognition unit 230 recognizes the state of the robot 100 on the basis of the information detected by the sensor unit 200. For example, the state recognition unit 230 recognizes the remaining battery level of the robot 100, the brightness of the surrounding environment of the robot 100, and the like as the state of the robot 100.

The emotion determination unit 232 determines an emotion value indicating the emotion of the user 10 on the basis of the information analyzed by the sensor module unit 210 and the state of the user 10 recognized by the state recognition unit 230. For example, the information analyzed by the sensor module unit 210 and the recognized state of the user 10 are input to a neural network trained in advance, and an emotion value indicating the emotion of the user 10 is acquired.

Here, the emotion value indicating the emotion of the user 10 is a value indicating whether the emotion of the user is positive or negative. For example, in a case where the emotion of the user is a bright emotion accompanied with pleasure or comfort, such as "joy", "cheerful", "pleasant", "relief", "excitement", "relieved", and "sense of fulfillment", a positive value is indicated, and the value becomes larger as the emotion is brighter. If the user's emotion is an emotion that makes the user feel unpleasant, such as "anger", "sorrow", "unpleasant", "anxiety", "sadness", "worried", and "feeling empty", the negative value is indicated, and the absolute value of the negative value increases as the user feels unpleasant. In a case where the user's emotion is not any of the above ("neutral"), a value of 0 is indicated.

Furthermore, the emotion determination unit 232 determines an emotion value indicating the emotion of the robot 100 on the basis of the information analyzed by the sensor module unit 210, the information detected by the sensor unit 200, and the state of the user 10 recognized by the state recognition unit 230.

The emotion value of the robot 100 includes the emotion value for each of the plurality of emotion classifications, and is, for example, a value (0 to 5) indicating the strength of each of "joy", "anger", "sorrow", and "cheerful".

Specifically, the emotion determination unit 232 determines an emotion value indicating the emotion of the robot 100 according to a rule for updating the emotion value of the robot 100 defined in association with the information analyzed by the sensor module unit 210 and the state of the user 10 recognized by the state recognition unit 230.

For example, in a case where the state recognition unit 230 recognizes that the user 10 looks sad, the emotion determination unit 232 increases the emotion value of "sorrow" of the robot 100. Furthermore, in a case where the state recognition unit 230 recognizes that the user 10 has a smiling face, the emotion value of "joy" of the robot 100 is increased.

Note that the emotion determination unit 232 may determine the emotion value indicating the emotion of the robot 100 in further consideration of the state of the robot 100. For example, in a case where the remaining battery level of the robot 100 is low, a case where the surrounding environment of the robot 100 is dark, or the like, the emotion value of "sorrow" of the robot 100 may be increased. Furthermore, in the case of the user 10 continuously talking to the robot even though the remaining battery level is low, the emotion value of "anger" may be increased.

The behavior recognition unit 234 recognizes a behavior of the user 10 on the basis of the information analyzed by the sensor module unit 210 and the state of the user 10 recognized by the state recognition unit 230. For example, the information analyzed by the sensor module unit 210 and the recognized state of the user 10 are input to a neural network trained in advance, probabilities of a plurality of predetermined behavior classifications (for example, "smile", "angry", "ask", and "sad") are acquired, and the behavior classification having the highest probability is recognized as the behavior of the user 10.

As described above, in the present embodiment, the robot 100 acquires the utterance content of the user 10 after identifying the user 10, but in acquiring and using the utterance content, the action control system of the robot 100 according to the present embodiment considers protection of personal information and privacy of the user 10 in addition to acquiring necessary consent according to laws and regulations from the user 10.

Next, processing of the action determination unit 236 when the robot 100 performs response processing of responding to the behavior of the user 10 will be described.

The action determination unit 236 determines an action corresponding to the behavior of the user 10 recognized by the behavior recognition unit 234 on the basis of the current emotion value of the user 10 determined by the emotion determination unit 232, the history data 222 of the past emotion values determined by the emotion determination unit 232 before the current emotion value of the user 10 is determined, and the emotion value of the robot 100. In the present embodiment, a case where the action determination unit 236 uses one most recent emotion value included in the history data 222 as the past emotion value of the user 10 will be described, but the disclosed technology is not limited to this aspect. For example, the action determination unit 236 may use a plurality of most recent emotion values as the past emotion values of the user 10, or may use emotion values that are earlier by a unit period such as one day before. Furthermore, the action determination unit 236 may determine an action corresponding to the behavior of the user 10 in further consideration of the history of the past emotion values of the robot 100 in addition to the current emotion value of the robot 100. The action determined by the action determination unit 236 includes a gesture performed by the robot 100 or an utterance content of the robot 100.

The action determination unit 236 according to the present embodiment determines an action of the robot 100 on the basis of a combination of the past emotion value and the current emotion value of the user 10, the emotion value of the robot 100, the behavior of the user 10, and the action determination model 221 as an action corresponding to the behavior of the user 10. For example, in a case where the past emotion value of the user 10 is a positive value and the current emotion value is a negative value, the action determination unit 236 determines an action for positively changing the emotion value of the user 10 as an action corresponding to the behavior of the user 10.

In the reaction rule as the action determination model 221, the action of the robot 100 according to the combination of the past emotion value and the current emotion value of the user 10, the emotion value of the robot 100, and the behavior of the user 10 is determined. For example, in a case where the past emotion value of the user 10 is a positive value, the current emotion value is a negative value, and the behavior of the user 10 is sad, a combination of a gesture and an utterance content at the time of making a supportive prompt for the user 10 using a gesture is determined as the action of the robot 100.

For example, in the reaction rule as the action determination model 221, the action of the robot 100 is determined for all combinations of the pattern of the emotion value of the robot 100 (specifically, 1296 patterns, calculated as the fourth power of 6 values from "0" to "5" for "joy", "anger", "sorrow", and "cheerful"), the pattern of the combination of the past emotion value and the current emotion value of the user 10, and the action pattern of the user 10. That is, for each pattern of the emotion value of the robot 100, the action of the robot 100 according to the action pattern of the user 10 is determined for each of a plurality of combinations such that the combination of the past emotion value and the current emotion value of the user 10 is a negative value and a negative value, a negative value and a positive value, a positive value and a negative value, a positive value and a positive value, a negative value and a neutral value, and a neutral value and a neutral value. Note that the action determination unit 236 may transition to the operation mode of determining the action of the robot 100 using the history data 222, for example, in a case where the user 10 has made an utterance that intends a conversation continued from a past topic such as "I want to talk about the topic I discussed earlier".

Note that, in the reaction rule as the action determination model 221, at most one of the gesture and one of the statement content may be defined as the action of the robot 100 for each pattern of the emotion value of the robot 100 (more specifically, the above 1296 patterns) at the maximum. Alternatively, in the reaction rule as the action determination model 221, at least one of the gesture and the statement content may be determined as the action of the robot 100 for each of the groups of the patterns of the emotion values of the robot 100.

The intensity of each gesture included in the action of the robot 100 defined in the reaction rule as the action determination model 221 is determined in advance. In each utterance content included in the action of the robot 100 defined in the reaction rule as the action determination model 221, the intensity of the utterance content is predetermined.

The storage control unit 238 determines whether or not to store data including the behavior of the user 10 in the history data 222 on the basis of the intensity of the action determined in advance for the action determined by the action determination unit 236 and the emotion value of the robot 100 determined by the emotion determination unit 232.

Specifically, in a case where the total value of the sum of the emotion values for each of the plurality of emotion classifications of the robot 100 and the intensity that is the sum of the intensity predetermined for the gesture included in the action determined by the action determination unit 236 and the intensity predetermined for the utterance content included in the action determined by the action determination unit 236 is equal to or greater than a threshold, it is determined to store data including the behavior of the user 10 in the history data 222.

In a case where the storage control unit 238 determines to store the data including the behavior of the user 10 in the history data 222, the action determined by the action determination unit 236, the information (for example, any peripheral information such as data such as a voice, an image, and a smell of the place) analyzed by the sensor module unit 210 from the current time point to a certain period before, and the state (for example, expression, emotion, and the like of the user 10) of the user 10 recognized by the state recognition unit 230 are stored in the history data 222.

The action control unit 250 controls the control target 252 on the basis of the action determined by the action determination unit 236. For example, when the action determination unit 236 determines an action including utterance, the action control unit 250 causes a speaker included in the control target 252 to output a voice. At this time, the action control unit 250 may determine the utterance speed of the voice on the basis of the emotion value of the robot 100. For example, the action control unit 250 determines a higher utterance speed as the emotion value of the robot 100 is larger. In this manner, the action control unit 250 determines the execution form of the action determined by the action determination unit 236 on the basis of the emotion value determined by the emotion determination unit 232.

The action control unit 250 may recognize a change in emotion of the user 10 with respect to execution of the action determined by the action determination unit 236. For example, the change in emotion may be recognized on the basis of the voice or expression of the user 10. In addition, a change in emotion of the user 10 may be recognized on the basis of detection of an impact by the touch sensor 205 included in the sensor unit 200. In a case where an impact is detected by the touch sensor 205 included in the sensor unit 200, it may be recognized that the emotion of the user 10 is worsened, or in a case where it is determined that the reaction of the user 10 is smiling or happy from the detection result of the touch sensor 205 included in the sensor unit 200, it may be recognized that the emotion of the user 10 is improved. Information indicating the reaction of the user 10 is output to the communication processing unit 280.

Furthermore, after the action control unit 250 executes the action determined by the action determination unit 236 in the execution form determined according to the emotion of the robot 100, the emotion determination unit 232 further changes the emotion value of the robot 100 on the basis of the user's reaction to the execution of the action. Specifically, the emotion determination unit 232 increases the emotion value of "joy" of the robot 100 in a case where the user's response to the action determined by the action determination unit 236 being performed on the user in the execution form determined by the action control unit 250 is not poor. Furthermore, the emotion determination unit 232 increases the emotion value of "sorrow" of the robot 100 in a case where the user's response to the action determined by the action determination unit 236 being performed on the user in the execution form determined by the action control unit 250 is poor.

Furthermore, the action control unit 250 expresses the emotion of the robot 100 on the basis of the determined emotion value of the robot 100. For example, in a case where the emotion value of "joy" of the robot 100 is increased, the action control unit 250 controls the control target 252 to cause the robot 100 to perform a gesture of joy. Furthermore, in a case where the emotion value of "sorrow" of the robot 100 is increased, the action control unit 250 controls the control target 252 such that the posture of the robot 100 becomes a drooping posture.

The communication processing unit 280 is responsible for communication with the server 300. As described above, the communication processing unit 280 transmits the user reaction information to the server 300. Furthermore, the communication processing unit 280 receives the updated reaction rule from the server 300. When receiving the updated reaction rule from the server 300, the communication processing unit 280 updates the reaction rule as the action determination model 221.

The server 300 performs communication between the robot 100, the robot 101, and the robot 102 and the server 300, receives the user reaction information transmitted from the robot 100, and updates the reaction rule on the basis of the reaction rule including the action for which a positive reaction has been obtained.

The related information collection unit 270 collects information related to the preference information from external data (web sites such as news sites and moving image sites) on the basis of the preference information acquired for the user 10 at a predetermined timing.

Specifically, the related information collection unit 270 acquires preference information indicating a matter of interest of the user 10 from the utterance content of the user 10 or the setting operation by the user 10. The related information collection unit 270 collects news related to the preference information at regular intervals, for example, using ChatGPT plugins (Internet search <URL: https://openai.com/blog/chatgpt-plugins>), from external data. For example, in a case where it is acquired as the preference information that the user 10 is a fan of a specific professional baseball team, the related information collection unit 270 collects news related to a game result of the specific professional baseball team from external data at a predetermined time every day, for example, using ChatGPT plugins.

The emotion determination unit 232 determines the emotion of the robot 100 on the basis of the information related to the preference information collected by the related information collection unit 270.

Specifically, the emotion determination unit 232 inputs a text indicating information related to the preference information collected by the related information collection unit 270 to a neural network trained in advance for determining an emotion, acquires an emotion value indicating each emotion, and determines the emotion of the robot 100. For example, in a case where the collected news related to the game result of the specific professional baseball team indicates that the specific professional baseball team has won, the emotion value of "joy" of the robot 100 is determined to be large.

When the emotion value of the robot 100 is equal to or greater than the threshold, the storage control unit 238 stores information related to the preference information collected by the related information collection unit 270 in the collected data 223.

Next, processing of the action determination unit 236 when the robot 100 performs the backchanneling processing of performing a backchanneling to the behavior of the user 10 will be described.

The action determination unit 236 determines a backchanneling response or a gesture determined in advance according to the emotion of the user 10 as the action of the robot 100. Specifically, the action determination unit 236 determines a backchanneling response or a gesture as the preliminary action to be performed by the robot 100 from when the emotion of the user 10 is determined by the emotion determination unit 232 to when the action of the robot 100 determined as the action corresponding to the behavior of the user (that is, the action determined in the above response processing) starts to be executed.

For example, a backchanneling pattern (a backchanneling motion and a backchanneling intensity are different) corresponding to each pattern (specifically, 1296 patterns, calculated as the fourth power of 6 values from "0" to "5" for "joy", "anger", "sorrow", and "cheerful") of the emotion value of the user 10 is determined in advance, and the correspondence relationship is stored in the storage unit 220. That is, the backchanneling method of the robot 100 is determined for the pattern of the emotion value of the user 10. When the emotion determination unit 232 determines the emotion of the user 10, the action determination unit 236 determines the backchanneling pattern with reference to the correspondence between the predetermined pattern of the emotion value and the backchanneling pattern.

As an example, in a case where the emotion value of the user 10 is "joy"=5, the robot 100 may give a backchanneling response of "Ah". Furthermore, in a case where the emotion value of the user 10 is "joy"=3, the robot 100 may give a backchanneling response of "Ahh". Furthermore, in a case where the emotion value of the user 10 is "sad"=3, the robot 100 may give a backchanneling response of "Uh". Furthermore, the backchanneling response is not limited to the backchanneling by these voices, and a backchanneling including a gesture may be performed.

The action determination unit 236 executes the backchanneling processing in parallel with the response processing. That is, the robot 100 makes a backchanneling response before the robot 100 responds to the behavior of the user 10. For example, if there is a delay between when the user 10 takes a behavior and when the robot 100 responds, the robot 100 does nothing without saying, and the user 10 may feel uncomfortable. On the other hand, since the backchanneling processing is faster than the response processing, the backchanneling processing is not an unnatural backchanneling but can realize an interaction in which the situation is sensed from the atmosphere of the place, by performing the backchanneling response immediately in conjunction with the emotion of the user 10.

For example, in a case where the emotion engine, which is the emotion determination unit 232 of the robot 100, detects an emotion in about 100 msec, the determination of backchanneling of the robot 100 may be performed at a timing at which the frequency is at least similar to or earlier than the detection frequency of the emotion engine (for example, 100 msec). The detection frequency of the emotion engine may be interpreted as a sampling rate. Note that the detection frequency (in other words, the sampling rate) of the emotion engine is not limited to 100 ms, and may be changed according to the situation (for example, when playing sports, or the like), the age of the user, or the like.

Note that the action determination unit 236 may determine, as the action of the robot 100, a backchanneling response predetermined in accordance with the emotion of the robot 100 in addition to or instead of the emotion of the user 10. In this case, a backchanneling pattern corresponding to each combination of the pattern of the emotion value of the user 10 and the pattern of the emotion value of the robot 100 may be determined in advance.

Next, processing of the action determination unit 236 when the robot 100 performs autonomous processing of autonomously acting will be described.

The action determination unit 236 uses at least one of the state of the user 10, the emotion of the user 10, the emotion of the robot 100, and the state of the robot 100, and the action determination model 221 at a predetermined timing, to determine, as the action of the robot 100, any of a plurality of types of robot actions including not acting. Here, a case where a sentence generation model having an interaction function is used as the action determination model 221 will be described as an example.

Specifically, the action determination unit 236 inputs a text representing at least one of the state of the user 10, the emotion of the user 10, the emotion of the robot 100, and the state of the robot 100 and a text for inquiry about the robot action to the sentence generation model, and determines the action of the robot 100 on the basis of the output of the sentence generation model.

For example, the plurality of types of robot actions includes the following (1) to (10).
(1) The robot does nothing.
(2) The robot dreams.
(3) The robot talks to the user.
(4) The robot creates a picture diary.
(5) The robot proposes an activity.
(6) The robot suggests a person with whom the user should meet.
(7) The robot introduces news that the user is interested in.
(8) The robot edits photographs and moving images.
(9) The robot studies with the user.
(10) The robot evokes memory.

The action determination unit 236 inputs, to the sentence generation model, a text indicating the state of the user 10 and the state of the robot 100 recognized by the state recognition unit 230, the current emotion value of the user 10 determined by the emotion determination unit 232, and the current emotion value of the robot 100, and a text for inquiry about any of a plurality of types of robot actions including no action every lapse of a certain period of time, and determines the action of the robot 100 on the basis of the output of the sentence generation model. Here, in a case where there is no user 10 around the robot 100, the text to be input to the sentence generation model need not to include the state of the user 10 and the current emotion value of the user 10, or may include the fact that there is no user 10.

As an example, a text such as "the robot is in a very enjoyable state. The user is in a moderately enjoyable state. The user is sleeping. Which one of the following (1) to (10) is better as the action of the robot?
(1) The robot does nothing.
(2) The robot dreams.
(3) The robot speaks to the user.
..." is input to the sentence generation model. Based on the output "It can be said that either (1) does nothing or (2) the robot dreams is the most appropriate behavior." of the sentence generation model, "(1) does nothing" or "(2) the robot dreams" is determined as the action of the robot 100.

As another example, a text such as "The robot is in a slightly lonely state. The user is absent. The surroundings of the robot are dark. Which one of the following (1) to (10) is better as the action of the robot? (1) The robot does nothing.
(2) The robot dreams.
(3) The robot speaks to the user.
..." is input to the sentence generation model. On the basis of the output "It can be said that either (2) the robot dreams or (4) the robot creates a picture diary is the most appropriate action." of the sentence generation model, "(2) The robot dreams" or "(4) The robot creates a picture diary." is determined as the action of the robot 100.

In a case where the action determination unit 236 determines that "(2) The robot dreams.", that is, the creation of the original event is to be performed as the robot action, the action determination unit creates the original event obtained by combining a plurality of pieces of event data in the history data 222 using the sentence generation model. At this time, the storage control unit 238 stores the created original event in the history data 222.

In a case where it is determined that "(3) The robot talks to the user.", that is, the robot 100 utters, as the robot action, the action determination unit 236 determines the utterance content of the robot corresponding to the user state and the user's emotion or the robot's emotion using the sentence generation model. At this time, the action control unit 250 causes a speaker included in the control target 252 to output a voice representing the determined utterance content of the robot. When the user 10 is absent around the robot 100, the action control unit 250 stores the determined utterance content of the robot in the action schedule data 224 without outputting a voice representing the determined utterance content of the robot.

When determining that "(7) The robot introduces news that the user is interested in." as the robot action, the action determination unit 236 determines the utterance content of the robot corresponding to the information stored in the collected data 223 using the sentence generation model. At this time, the action control unit 250 causes a speaker included in the control target 252 to output a voice representing the determined utterance content of the robot. When the user 10 is absent around the robot 100, the action control unit 250 stores the determined utterance content of the robot in the action schedule data 224 without outputting a voice representing the determined utterance content of the robot.

When it is determined that "(4) The robot creates a picture diary.", that is, the robot 100 creates an event image, as the robot action, the action determination unit 236 generates an image representing the event data for the event data selected from the history data 222 using the image generation model, generates an explanatory sentence representing the event data using the sentence generation model, and outputs a combination of the image representing the event data and the explanatory sentence representing the event data as the event image. When the user 10 is absent around the robot 100, the action control unit 250 stores the event image in the action schedule data 224 without outputting the event image.

In a case where it is determined that the robot action is "(8) The robot edits photographs and moving images.", that is, editing an image, the action determination unit 236 selects event data from the history data 222 on the basis of the emotion value, edits the image data of the selected event data, and outputs the edited image data. When the user 10 is absent around the robot 100, the action control unit 250 stores the edited image data in the action schedule data 224 without outputting the edited image data.

In a case where it is determined that "(5) The robot proposes an activity.", that is, the behavior of the user 10 is proposed as the robot action, the action determination unit 236 determines the proposed behavior of the user using the sentence generation model on the basis of the event data stored in the history data 222. At this time, the action control unit 250 causes a speaker included in the control target 252 to output a voice that proposes a behavior of the user. When the user 10 is absent around the robot 100, the action control unit 250 stores proposal of the behavior of the user in the action schedule data 224 without outputting a voice that proposes the behavior of the user.

In a case where it is determined, as the robot action, to "(6) The robot proposes a person with whom the user should meet.", that is, to propose a partner with whom the user 10 should have a contact, the action determination unit 236 determines a person with whom the user receiving the proposal should have a contact using the sentence generation model on the basis of the event data stored in the history data 222. At this time, the action control unit 250 causes a speaker included in the control target 252 to output a voice indicating that a person with whom the user should have a contact is suggested. Note that, in a case where the user 10 is absent around the robot 100, the action control unit 250 stores proposal of a person with whom the user should have a contact in the action schedule data 224 without outputting a voice indicating proposal of a person with whom the user should have a contact.

In a case where it has been determined, as the robot action, to "(9) The robot studies together with the user.", that is, robot 100 utters about study, the action determination unit 236 uses the sentence generation model to determine an utterance content of the robot for urging the user to study, giving a study problem, or giving advice related to study, which corresponds to the user state and the user's emotion or the robot's emotion. At this time, the action control unit 250 causes a speaker included in the control target 252 to output a voice representing the determined utterance content of the robot. When the user 10 is absent around the robot 100, the action control unit 250 stores the determined utterance content of the robot in the action schedule data 224 without outputting a voice representing the determined utterance content of the robot.

In a case where the action determination unit 236 determines, as the robot action, that "(10) The robot evokes memory.", that is, to remember the event data, the action determination unit selects the event data from the history data 222. At this time, the emotion determination unit 232 determines the emotion of the robot 100 on the basis of the selected event data. Furthermore, the action determination unit 236 creates an emotion change event representing the utterance content or action of the robot 100 for changing the user's emotion value using the sentence generation model on the basis of the selected event data. At this time, the storage control unit 238 stores the emotion change event in the action schedule data 224.

For example, in a case where it is stored in the history data 222 that the video the user was watching was related to a panda as event data, and the event data is selected, and in a case where a text such as "What are the lines to say about the topic related to the panda when the robot meets with the user next time? Give three examples." is input to the sentence generation model and the output of the sentence generation model is "(1) Let's go to the zoo, (2) Let's draw a picture of a panda, and (3) Let's buy a stuffed panda.", the robot 100 inputs "What makes the user most happy in (1), (2), and (3)?" to the sentence generation model and the output of the sentence generation model is "(1) Let's go to the zoo", utterance of the robot 100 to "(1) Let's go to the zoo" when the robot 100 meets the user next is created as the emotion change event and stored in the action schedule data 224.

Furthermore, for example, event data having a large emotion value of the robot 100 is selected as an impressive memory of the robot 100. This makes it possible to create an emotion change event on the basis of the event data selected as an impressive memory.

On the basis of the state of the user 10 recognized by the state recognition unit 230, in a case where a behavior of the user 10 with respect to the robot 100 is detected from a state where there is no behavior of the user 10 with respect to the robot 100, the action determination unit 236 reads data stored in the action schedule data 224 and determines an action of the robot 100.

For example, in a case where the user 10 is absent around the robot 100, when the user 10 is detected, the action determination unit 236 reads data stored in the action schedule data 224 and determines an action of the robot 100. In addition, in a case where the user 10 is sleeping, when detecting that the user 10 has woken up, the action determination unit 236 reads data stored in the action schedule data 224 and determines an action of the robot 100.

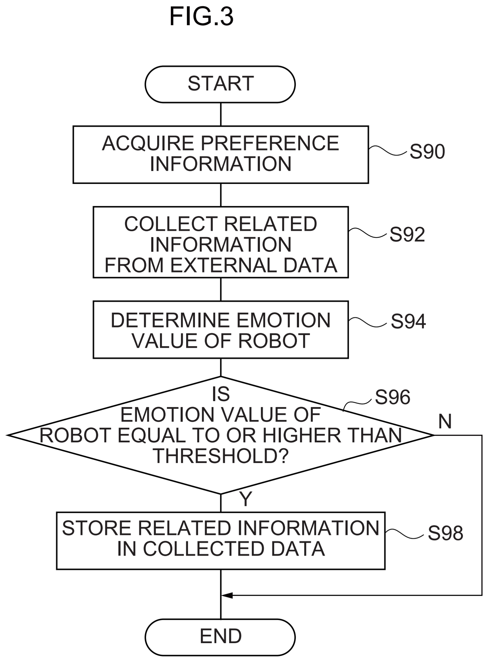

Fig. 3 schematically illustrates an example of an operation flow related to collection processing of collecting information related to preference information of the user 10. The operation flow illustrated in Fig. 3 is repeatedly executed every certain period. It is assumed that preference information indicating a matter of interest of the user 10 is acquired from the utterance content of the user 10 or the setting operation by the user 10. Note that "S" in the operation flow represents a step to be executed.

First, in step S90, the related information collection unit 270 acquires preference information indicating a matter of interest to the user 10.

In step S92, the related information collection unit 270 collects information related to the preference information from the external data.

In step S94, the emotion determination unit 232 determines the emotion value of the robot 100 on the basis of the information related to the preference information collected by the related information collection unit 270.

In step S96, the storage control unit 238 determines whether or not the emotion value of the robot 100 determined in step S94 is equal to or greater than a threshold. When the emotion value of the robot 100 is less than the threshold, the information related to the collected preference information is not stored in the collected data 223, and the processing ends. On the other hand, when the emotion value of the robot 100 is equal to or greater than the threshold, the process proceeds to step S98.

In step S98, the storage control unit 238 stores information related to the collected preference information in the collected data 223, and ends the processing.

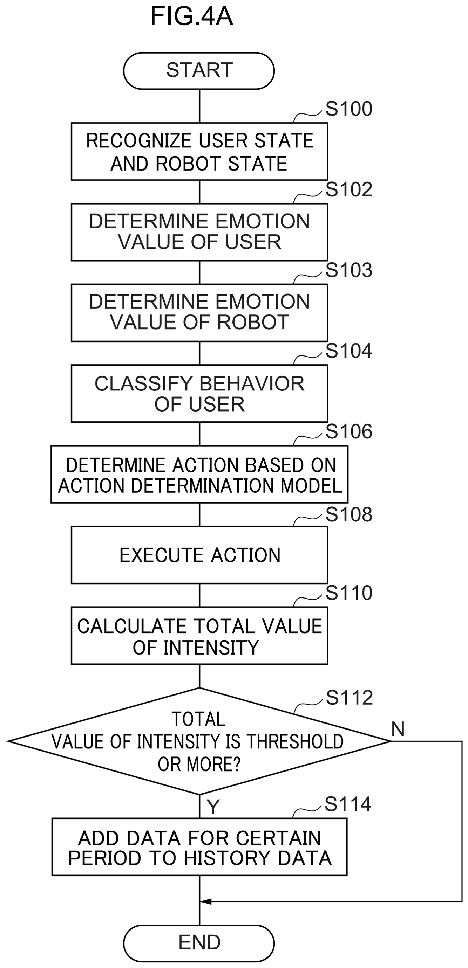

Fig. 4A schematically illustrates an example of an operation flow related to an operation of determining an action in the robot 100 when the robot 100 performs response processing of responding to the behavior of the user 10. The operation flow illustrated in Fig. 4A is repeatedly executed. At this time, it is assumed that information analyzed by the sensor module unit 210 is input.

First, in step S100, the state recognition unit 230 recognizes the state of the user 10 and the state of the robot 100 on the basis of the information analyzed by the sensor module unit 210.

In step S102, the emotion determination unit 232 determines an emotion value indicating the emotion of the user 10 on the basis of the information analyzed by the sensor module unit 210 and the state of the user 10 recognized by the state recognition unit 230.

In step S103, the emotion determination unit 232 determines an emotion value indicating the emotion of the robot 100 on the basis of the information analyzed by the sensor module unit 210 and the state of the user 10 recognized by the state recognition unit 230. The emotion determination unit 232 adds the determined emotion value of the user 10 and the emotion value of the robot 100 to the history data 222.

In step S104, the behavior recognition unit 234 recognizes the behavior classification of the user 10 on the basis of the information analyzed by the sensor module unit 210 and the state of the user 10 recognized by the state recognition unit 230.

In step S106, the action determination unit 236 determines the action of the robot 100 on the basis of the combination of the current emotion value of the user 10 determined in step S102 and the past emotion value included in the history data 222, the emotion value of the robot 100, the behavior of the user 10 recognized in step S104, and the action determination model 221.

In step S108, the action control unit 250 controls the control target 252 on the basis of the action determined by the action determination unit 236.

In step S110, the storage control unit 238 calculates a total value of the intensities on the basis of the intensity of the action predetermined for the action determined by the action determination unit 236 and the emotion value of the robot 100 determined by the emotion determination unit 232.

In step S112, the storage control unit 238 determines whether or not the total value of the intensities is equal to or greater than the threshold. In a case where the total value of the intensities is less than the threshold, the event data including the behavior of the user 10 is not stored in the history data 222, and the processing ends. On the other hand, when the total value of the intensities is equal to or larger than the threshold, the process proceeds to step S114.

In step S114, event data including the action determined by the action determination unit 236, the information analyzed by the sensor module unit 210 from the current time point to a certain period before, and the state of the user 10 recognized by the state recognition unit 230 is stored in the history data 222.

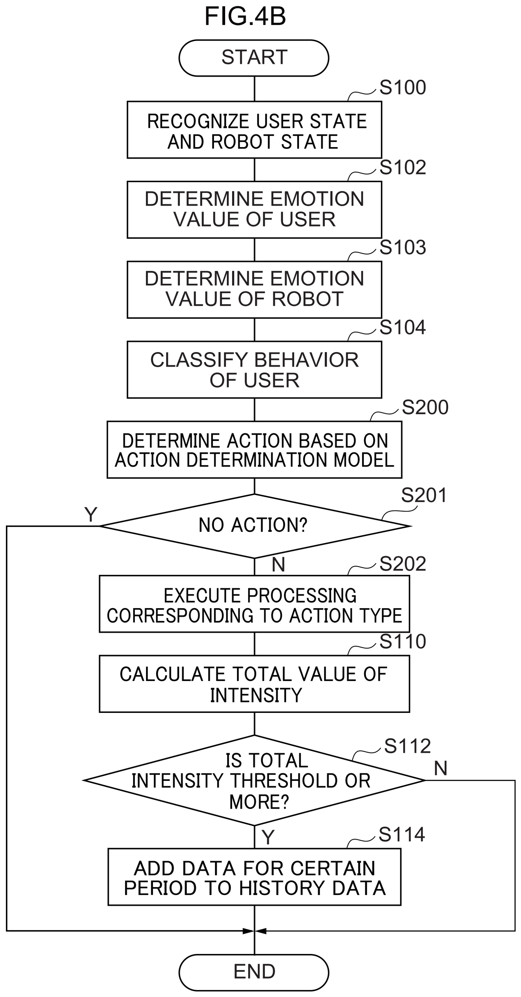

Fig. 4B schematically illustrates an example of an operation flow related to an operation of determining an action in the robot 100 when the robot 100 performs autonomous processing of autonomously acting. The operation flow illustrated in Fig. 4B is repeatedly and automatically executed, for example, every lapse of a certain time. At this time, it is assumed that information analyzed by the sensor module unit 210 is input. Note that processing similar to that in Fig. 4A is represented by the same step number.

First, in step S100, the state recognition unit 230 recognizes the state of the user 10 and the state of the robot 100 on the basis of the information analyzed by the sensor module unit 210.

In step S102, the emotion determination unit 232 determines an emotion value indicating the emotion of the user 10 on the basis of the information analyzed by the sensor module unit 210 and the state of the user 10 recognized by the state recognition unit 230.

In step S103, the emotion determination unit 232 determines an emotion value indicating the emotion of the robot 100 on the basis of the information analyzed by the sensor module unit 210 and the state of the user 10 recognized by the state recognition unit 230. The emotion determination unit 232 adds the determined emotion value of the user 10 and the emotion value of the robot 100 to the history data 222.

In step S104, the behavior recognition unit 234 recognizes the behavior classification of the user 10 on the basis of the information analyzed by the sensor module unit 210 and the state of the user 10 recognized by the state recognition unit 230.

In step S200, the action determination unit 236 determines, as the action of the robot 100, any of a plurality of types of robot actions including not acting, on the basis of the state of the user 10 recognized in step S100, the emotion of the user 10 determined in step S102, the emotion of the robot 100, the state of the robot 100 recognized in step S100, the behavior of the user 10 recognized in step S104, and the action determination model 221.

In step S201, the action determination unit 236 determines whether or not it is determined in step S200 that the robot does not act. In a case where it is determined not to act as the action of the robot 100, the processing ends. On the other hand, when it is not determined not to act as the action of the robot 100, the process proceeds to step S202.

In step S202, the action determination unit 236 performs processing according to the type of robot action determined in step S200. At this time, the action control unit 250, the emotion determination unit 232, or the storage control unit 238 executes processing in accordance with the type of robot action.

In step S110, the storage control unit 238 calculates a total value of the intensities on the basis of the intensity of the action predetermined for the action determined by the action determination unit 236 and the emotion value of the robot 100 determined by the emotion determination unit 232.

In step S112, the storage control unit 238 determines whether or not the total value of the intensities is equal to or greater than the threshold. In a case where the total value of the intensities is less than the threshold, the data including the behavior of the user 10 is not stored in the history data 222, and the processing ends. On the other hand, when the total value of the intensities is equal to or larger than the threshold, the process proceeds to step S114.

In step S114, the storage control unit 238 stores, in the history data 222, the action determined by the action determination unit 236, the information analyzed by the sensor module unit 210 from the current time point to a certain period before, and the state of the user 10 recognized by the state recognition unit 230.

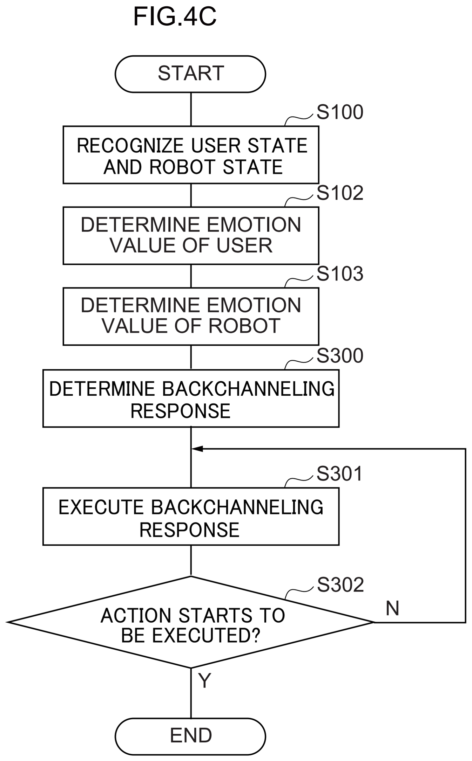

Fig. 4C schematically illustrates an example of an operation flow related to the backchanneling processing in which the robot 100 gives a backchanneling response to the behavior of the user 10. The operation flow illustrated in Fig. 4C is repeatedly executed in parallel with the response processing (see Fig. 4A). At this time, it is assumed that information analyzed by the sensor module unit 210 is input. Note that processing similar to that in Fig. 4A is represented by the same step number.

First, in step S100, the state recognition unit 230 recognizes the state of the user 10 and the state of the robot 100 on the basis of the information analyzed by the sensor module unit 210.

In step S102, the emotion determination unit 232 determines an emotion value indicating the emotion of the user 10 on the basis of the information analyzed by the sensor module unit 210 and the state of the user 10 recognized by the state recognition unit 230.

In step S103, the emotion determination unit 232 determines an emotion value indicating the emotion of the robot 100 on the basis of the information analyzed by the sensor module unit 210 and the state of the user 10 recognized by the state recognition unit 230. The emotion determination unit 232 adds the determined emotion value of the user 10 and the emotion value of the robot 100 to the history data 222.

In step S300, the action determination unit 236 determines, as the action of the robot 100, a backchanneling response predetermined in accordance with the emotion value of the user 10 determined in step S102 and/or the emotion value of the robot 100 determined in step S103. In step S301, the action control unit 250 controls the robot 100 to execute the backchanneling determined in step S300.

In step S302, the action determination unit 236 determines whether or not the robot 100 has started to execute an action (that is, whether or not step S108 has been completed) in the response processing executed in parallel. When the robot 100 starts to execute an action, the backchanneling processing is terminated. On the other hand, when the robot 100 has not yet executed an action, the process returns to step S301, and the processes of steps S301 to S302 are repeated.

As described above, according to the robot 100, the emotion value indicating the emotion of the robot 100 is determined on the basis of the user state, and whether or not to store data including the behavior of the user 10 in the history data 222 is determined on the basis of the emotion value of the robot 100. As a result, the capacity of the history data 222 that stores data including the behavior of the user 10 can be suppressed. Then, for example, when the robot 100 determines that the user state is the same as the user state 10 years ago after 10 years, the robot 100 reads the history data 222 of 10 years ago, and thus, can present the state of the user 10 of 10 years ago (for example, the expression, emotion, and the like of the user 10), and further, any peripheral information such as data of a voice, an image, a smell, and the like of the place to the user 10.

Furthermore, according to the robot 100, it is possible to cause the robot 100 to execute an appropriate action with respect to the behavior of the user 10. Conventionally, a behavior of a user is classified to determine an action including an expression or an appearance of a robot. On the other hand, the robot 100 determines the current emotion value of the user 10, and executes an action on the user 10 on the basis of the past emotion value and the current emotion value. Therefore, for example, in a case where the user 10 who was fine yesterday is depressed today, the robot 100 can utter, "You were fine yesterday. What's wrong with you today?". Furthermore, the robot 100 can also perform an utterance with a gesture. Furthermore, for example, in a case where the user 10 who was depressed yesterday is fine today, the robot 100 can utter, "You were depressed yesterday, but you look fine today?". Furthermore, for example, in a case where the user 10 who was fine yesterday is better today than yesterday, the robot 100 can utter, "You are better today than yesterday. Was anything better than yesterday?". Furthermore, for example, the robot 100 can make an utterance such as "Recently, the mood is stable, which is good." to the user 10 whose emotion value is 0 or more and whose state in which the fluctuation range of the emotion value is within a certain range continues.

Furthermore, for example, in a case where the robot 100 asks a question of "Did you finish the homework that you told about yesterday?" to the user 10 and an answer of "I did it" is obtained from the user 10, the robot can make an affirmative utterance such as "That's great!" and make an affirmative gesture such as applause or thumbs-up. Furthermore, for example, when the user 10 utters "The presentation we discussed the day before yesterday was successful", the robot 100 can make an affirmative utterance such as "Good job!" and also make the above affirmative gesture. As described above, the robot 100 performs an action based on the history of the state of the user 10, whereby the user 10 can be expected to feel a sense of closeness to the robot 100.

Furthermore, for example, in a case where the emotion value of "cheerful" of the emotion of the user 10 is equal to or greater than a threshold when the user 10 is watching a video related to a panda, the appearance scene of the panda in the video may be stored in the history data 222 as the event data.

Using the data accumulated in the history data 222 and the collected data 223, the robot 100 can always learn what conversation the user should have to maximize the emotion value expressing the user's happiness.

Furthermore, in a state where the robot 100 is not in conversation with the user 10, it is possible to autonomously start an action on the basis of the emotion of the robot 100.

Furthermore, in the autonomous processing, the robot 100 repeats automatically generating a question, inputting the question to the sentence generation model, and acquiring an output of the sentence generation model as an answer to the question, so that it is possible to create an emotion change event for increasing a good emotion and store the emotion change event in the action schedule data 224. In this manner, the robot 100 can execute self-learning.

Furthermore, when the robot 100 automatically generates a question in a state of not receiving a trigger from the outside, the question can be automatically generated on the basis of event data remaining in an impression specified from a history of past emotion values of the robot.

Furthermore, the related information collection unit 270 can execute self-learning by repeating a search execution stage of automatically executing keyword search in accordance with preference information regarding the user and acquiring a search result.

Here, in the search execution stage, the keyword search may be automatically executed on the basis of the impressive event data specified from the history of the past emotion values of the robot in a state where the trigger from the outside is not received.

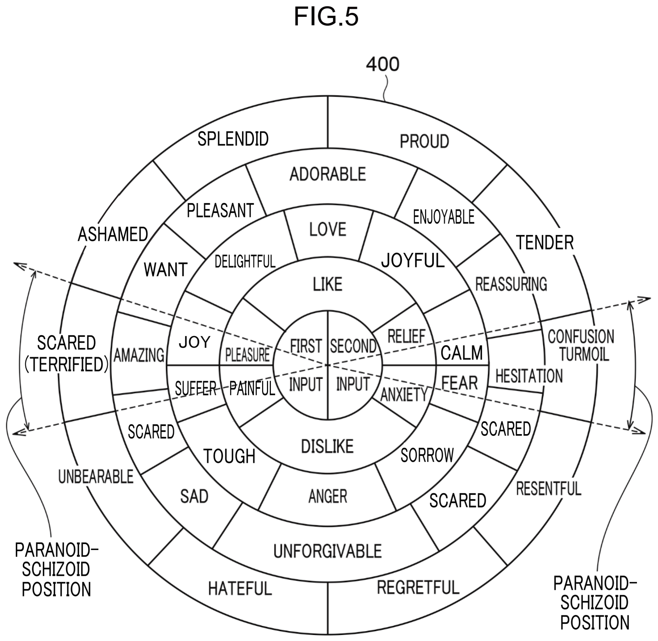

Note that the emotion determination unit 232 may determine the user's emotion in accordance with a specific mapping. Specifically, the emotion determination unit 232 may determine the user's emotion on the basis of an emotion map (see Fig. 5) that is a specific mapping.

Fig. 5 is a diagram illustrating an emotion map 400 on which a plurality of emotions is mapped. In the emotion map 400, emotions are arranged concentrically radially from the center. The closer to the center of the concentric circle, the more the emotion of the primitive state is arranged. Emotions indicating states and behaviors generated from the state of mind are arranged outside the concentric circle. The emotion is a concept including an affection and a mental state. On the left side of the concentric circle, emotions generated from reactions generally occurring in the brain are arranged. On the right side of the concentric circle, emotions induced by situation determination are generally arranged. In the upward and downward directions of the concentric circles, emotions generated from reactions generally occurring in the brain and induced by situational judgment are arranged. Furthermore, the emotion of "pleasant" is arranged on the upper side of the concentric circle, and the emotion of "unpleasant" is arranged on the lower side. As described above, in the emotion map 400, a plurality of emotions are mapped on the basis of a structure in which emotions are generated, and emotions that are likely to occur at the same time are mapped close to each other.
(1) For example, in a case where the emotion engine, which is the emotion determination unit 232 of the robot 100, detects the emotion at about 100 msec, the determination of the reaction operation (for example, backchanneling response) of the robot 100 may be performed at a timing at which the frequency is at least similar to the detection frequency (100 msec) of the emotion engine, or may be performed at a timing earlier than the detection frequency. The detection frequency of the emotion engine may be interpreted as a sampling rate.
   The emotion is detected in about 100 msec, and the reaction operation (for example, backchanneling response) is performed immediately in conjunction with the detection, whereby an unnatural backchanneling is eliminated, and an interaction in a tune with the atmosphere can be realized. The robot 100 performs a reaction operation (backchanneling response or the like) according to the directionality and the degree (strength) of the mandala of the emotion map 400. Note that the detection frequency (sampling rate) of the emotion engine is not limited to 100 ms, and may be changed according to the situation (such as when playing sports), the age of the user, or the like.
(2) In comparison with the emotion map 400, the directionality of the emotion and the strength of the degree thereof may be set in advance, and the backchanneling motion and the strength of the backchanneling response may be set. For example, in a case where the robot 100 feels a sense of stability, security, or the like, the robot 100 continues listening to the speech while nodding. When the robot 100 feels anxious, lost, or suspicious, the robot 100 may tilt its head and may stop shaking its head.
   These emotions are distributed in the 3 o'clock direction of the emotion map 400, and usually come and go between security and anxiety. In the right half of the emotion map 400, situation recognition is superior to internal sensation, and thus gives a calm impression.
(3) When the robot 100 feels good when receiving the compliment, a filler "Oh" may come in front of the line. When the robot feels hurt when receiving the harsh words, a filler "Ohh!" may come in front of the line. Furthermore, a physical reaction such as a gesture of the robot 100 crouching while saying "Ohh!" may be included. These emotions are distributed around 9 o'clock direction on the emotion map 400.
(4) In the left half of the emotion map 400, internal sensation (reaction) is superior to situation recognition. Therefore, an impression of unintentional reaction can be given.
   In a case where the robot 100 has a favorable feeling in situation recognition while having an internal sensation (reaction) of satisfaction, the robot 100 may nod deeply while looking at the conversation partner, or may utter "Uh-huh". In this manner, the robot 100 may generate a balanced favorable feeling to the conversation partner, that is, an action such as acceptance or tolerance to the conversation partner. Such emotions are distributed around 12 o'clock direction in the emotion map 400.
   On the other hand, even in the situation recognition while the robot 100 feels the internal sensation (reaction) of discomfort, the robot 100 may shake its head sideways when feeling disgust, and may turn red the LED of the eye and look at the conversation partner when feeling hatred. Such emotions are distributed around 6 o'clock direction in the emotion map 400.
(5) Since the inside of the emotion map 400 represents the inside of the mind and the outside of the emotion map 400 represents an action, the emotion is more visible (appears in the action) toward the outside of the emotion map 400.
(6) In a case where the robot 100 listens to a person's speech while feeling the sense of relief distributed around 3 o'clock direction on the emotion map 400, the robot slightly shakes its head vertically and says "Mm-hmm". However, in the direction of love around 12 o'clock direction, the robot may perform strong nodding such as shaking its head deeply vertically.

Here, human emotion is based on various balances such as posture and blood glucose level, and indicates a state of discomfort when the balance deviates from the ideal and a state of comfort when the balance approaches the ideal. Even in a robot, an automobile, a motorcycle, or the like, on the basis of various balances such as a posture and a remaining battery level, it is possible to make an emotion so as to indicate a state of discomfort when the balance deviates from the ideal and a state of comfort when the balance approaches the ideal. The emotion map may be generated, for example, on the basis of an emotional map (Research on the phonetic recognition of feelings and a system for emotional physiological brain signal analysis, Tokushima University, PhD thesis: https://ci.nii.ac.jp/naid/500000375379) of Dr. Mitsuyoshi. In the left half of the emotional map, emotions belonging to a region called "reaction" in which sensation is superior are arranged. Furthermore, in the right half of the emotional map, emotions belonging to a region called "situation" in which situation recognition is superior are arranged.

In the emotion map, two emotions for encouraging learning are defined. One is an emotion around the middle of negative "repentance" or "reflection" on the situation side. That is, it is when a negative emotion such as "I do not want to suffer like this again" or "I do not want to be scolded" occurs in the robot. The other is a positive "desire" feeling on the reactive side. That is, it is the time of a positive feeling such as "want more" or "want to know more".

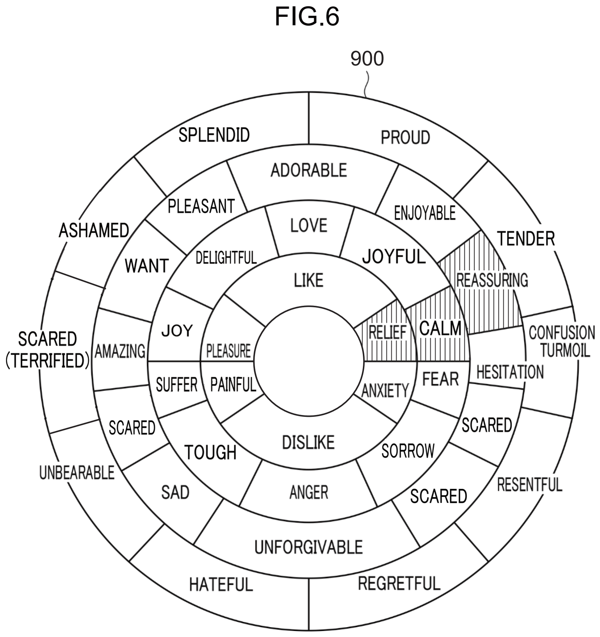

The emotion determination unit 232 inputs the information analyzed by the sensor module unit 210 and the recognized state of the user 10 to a neural network trained in advance, acquires an emotion value indicating each emotion indicated in the emotion map 400, and determines the emotion of the user 10. This neural network is trained in advance on the basis of a plurality of pieces of learning data that is a combination of the information analyzed by the sensor module unit 210 and the recognized state of the user 10 and the emotion value indicating each emotion indicated in the emotion map 400. Furthermore, in this neural network, as in an emotion map 900 illustrated in Fig. 6, emotions arranged close to each other are trained to have close values. Fig. 6 illustrates an example in which a plurality of emotions such as "relief", "calm", and "reassuring" have similar emotion values.

Furthermore, the emotion determination unit 232 may determine the emotion of the robot 100 according to a specific mapping. Specifically, the emotion determination unit 232 inputs the information analyzed by the sensor module unit 210, the state of the user 10 recognized by the state recognition unit 230, and the state of the robot 100 to a neural network trained in advance, acquires an emotion value indicating each emotion indicated in the emotion map 400, and determines the emotion of the robot 100. This neural network is trained in advance on the basis of a plurality of pieces of learning data that is a combination of the information analyzed by the sensor module unit 210, the recognized state of the user 10, and the state of the robot 100, and the emotion value indicating each emotion illustrated in the emotion map 400. For example, the neural network is trained on the basis of learning data indicating that the emotion value "3" of "pleasant" is obtained in a case where the robot 100 is recognized as being petted by the user 10 from the output of the touch sensor (not illustrated), and learning data indicating that the emotion value "3" of "anger" is obtained in a case where the robot 100 is recognized as being hit by the user 10 from the output of the acceleration sensor 206. Furthermore, in this neural network, as in an emotion map 900 illustrated in Fig. 6, emotions arranged close to each other are trained to have close values.

The action determination unit 236 adds a fixed sentence for inquiry about the action content of the robot corresponding to the behavior of the user to the text representing the behavior of the user, the user's emotion, and the robot's emotion, and inputs the text to the sentence generation model having the interaction function, thereby generating the action content of the robot.

For example, the action determination unit 236 acquires a text indicating the state of the robot 100 from the emotion of the robot 100 determined by the emotion determination unit 232 using the emotion table as illustrated in Table 1. Here, in the emotion table, an index number is assigned to each emotion value for each type of emotion, and a text indicating the state of the robot 100 is stored for each index number.

In a case where the emotion of the robot 100 determined by the emotion determination unit 232 corresponds to the index number "2", a text "very enjoyable state" is obtained. Note that, in a case where the emotion of the robot 100 corresponds to a plurality of index numbers, a plurality of texts indicating the state of the robot 100 are obtained.

Furthermore, an emotion table as illustrated in Table 2 is prepared for the emotion of the user 10.

Here, in a case where the behavior of the user is to speak "Let's play together", the emotion of the robot 100 is the index number "2", and the emotion of the user 10 is the index number "3",
a text such as "The robot is in a very enjoyable state. The user is in a moderately enjoyable state. The user says "Let's play together". How do you answer as a robot?" is input to the sentence generation model to acquire the action content of the robot. The action determination unit 236 determines an action of the robot from the action content.

**[Table 1]**

| Index number | Emotion type | Emotion value | Robot state |
|---|---|---|---|
| 1 | Enjoyable | 5 | Extremely enjoyable state |
| 2 | Enjoyable | 4 | Very enjoyable state |
| 3 | Enjoyable | 3 | Moderately enjoyable state |
| 4 | Enjoyable | 2 | Somewhat enjoyable state |
| 5 | Enjoyable | 1 | Slightly enjoyable state |
| ... | ... | ... | ... |

**[Table 2]**

| Index number | Emotion type | Emotion value | User state |
|---|---|---|---|
| 1 | Enjoyable | 5 | Extremely enjoyable state |
| 2 | Enjoyable | 4 | Very enjoyable state |
| 3 | Enjoyable | 3 | Moderately enjoyable state |
| 4 | Enjoyable | 2 | Somewhat enjoyable state |
| 5 | Enjoyable | 1 | Slightly enjoyable state |
| ... | ... | ... | ... |

As described above, the action determination unit 236 determines the action content of the robot 100 in accordance with the state related to the emotion of the robot 100 determined in advance for each type of the emotion of the robot 100 and for each strength of the emotion, and the behavior of the user 10. In this embodiment, the utterance content of the robot 100 in a case where an interaction with the user 10 is performed can be branched according to the state related to the emotion of the robot 100. That is, since the robot 100 can change the action of the robot according to the index number according to the emotion of the robot, the user has an impression that the robot has emotions, and is promoted to take a behavior such as talking to the robot.

Furthermore, the action determination unit 236 may generate the action content of the robot by adding a fixed sentence for asking a question about the action content of the robot corresponding to the behavior of the user and inputting the fixed sentence to the sentence generation model having the interaction function after adding not only the text indicating the behavior of the user, the emotion of the user, and the emotion of the robot but also the text indicating the content of the history data 222. As a result, the robot 100 can change the action of the robot according to the history data indicating the user's emotion and action, and thus, the user has an impression that the robot has personality, and is promoted to take a behavior such as talking to the robot. Furthermore, the history data may further include the emotion and action of the robot.

Furthermore, the emotion determination unit 232 may determine the emotion of the robot 100 on the basis of the action content of the robot 100 generated by the sentence generation model. Specifically, the emotion determination unit 232 inputs the action content of the robot 100 generated by the sentence generation model to the neural network trained in advance, acquires the emotion value indicating each emotion indicated in the emotion map 400, integrates the acquired emotion value indicating each emotion and the current emotion value indicating each emotion of the robot 100, and updates the emotion of the robot 100. For example, the acquired emotion value indicating each emotion and the current emotion value indicating each emotion of the robot 100 are averaged and integrated. This neural network is trained in advance on the basis of a plurality of pieces of learning data that is a combination of text representing the action content of the robot 100 generated by the sentence generation model and the emotion value representing each emotion illustrated in the emotion map 400.

For example, as the action content of the robot 100 generated by the sentence generation model, in a case where the utterance content of the robot 100 "That was good. Lucky you." is obtained, when the text representing the utterance content is input to the neural network, a high value is obtained as the emotion value of the emotion "pleasant", and the emotion of the robot 100 is updated so that the emotion value of the emotion "pleasant" becomes high.

In the robot 100, a method is executed in which a sentence generation model such as ChatGPT and the emotion determination unit 232 cooperate with each other, the robot has self-consciousness, and continues to grow with various parameters even while the user is not speaking.

ChatGPT is a large language model using a deep learning method. The ChatGPT can also refer to external data, and for example, in the ChatGPT plugins, a technology is known that refers to various external data such as weather information and hotel reservation information through conversation and outputs an answer as accurately as possible. For example, in ChatGPT, when a purpose is given in a natural language, source code can be automatically generated in various programming languages. For example, in ChatGPT, given problematic source code, it is also possible to debug to find problems and automatically generate improved source code. When these are combined and a purpose is given in a natural language, an autonomous agent that repeats code generation and debugging until there is no problem in the source code has appeared. As such an autonomous agent, AutoGPT, babyAGI, JARVIS, E2B, and the like are known.

In the robot 100 according to the present embodiment, the event data to be trained may be left in a database containing impressive memories by using a technique of leaving event data in which the robot has felt strong emotions for a long time and quickly forgetting event data in which the robot has not felt much emotions as described in Japanese Patent No. 6199927.

Further, the robot 100 may record the video data of the user 10 acquired by the camera function and the like in the history data 222. The robot 100 may acquire video data or the like from the history data 222 as necessary and provide the video data or the like to the user 10. The robot 100 may generate video data having a larger information amount as the strength of emotion is stronger and record the video data in the history data 222. For example, in a case where information in a high-compression format such as skeleton data is recorded, the robot 100 may switch to recording of information in a low-compression format such as an HD moving image in response to the emotion value of excitement exceeding a threshold. According to the robot 100, for example, it is possible to leave high-definition video data when the emotion of the robot 100 increases as a record.

When the robot 100 is not talking with the user 10, the robot 100 may automatically load the event data from the history data 222 in which the impressive event data is stored, and the emotion determination unit 232 may continue to update the emotion of the robot. When the robot 100 is not talking with the user 10 and the emotion of the robot 100 becomes an emotion encouraging learning, the robot 100 can create an emotion change event for changing the emotion of the user 10 to be good on the basis of the impressive event data. As a result, autonomous learning (recollection of event data) at an appropriate timing according to the emotional state of the robot 100 can be realized, and autonomous learning appropriately reflecting the emotional state of the robot 100 can be realized.

The emotion encouraging learning is an emotion of "repentance" or "reflection" on the emotional map of Dr. Mitsuyoshi in a negative state, and an emotion of "desire" on the emotional map in a positive state.

In the negative state, the robot 100 may treat "repentance" and "reflection" on the emotional map as emotions encouraging learning. In the negative state, the robot 100 may treat emotions adjacent to "repentance" and "reflection" as emotions for encouraging learning, in addition to "repentance" and "reflection" on the emotional map. For example, the robot 100 treats at least one of "sorrow", "stubbornness", "self-destruction", "self-precaution", "regret", and "despair" as an emotion for encouraging learning, in addition to "repentance" and "reflection". As a result, for example, when the robot 100 has a negative feeling such as "I do not want to suffer like this again" or "I do not want to be scolded", autonomous learning can be executed.

In a positive state, the robot 100 may treat "desire" on the emotional map as an emotion for encouraging learning. In a positive state, the robot 100 may treat an emotion adjacent to "desire" in addition to "desire" as an emotion for encouraging learning. For example, the robot 100 handles at least one of "happy", "intoxicated", "craving", "expecting", and "humiliated" as an emotion for encouraging learning, in addition to "desire". As a result, for example, when the robot 100 has a positive feeling such as "want more" or "want to know more", autonomous learning can be executed.

The robot 100 need not to execute autonomous learning when the robot 100 has an emotion other than the emotion encouraging learning as described above. As a result, for example, it is possible to prevent autonomous learning from being executed when the robot is extremely angry or blindly feeling love.

The emotion change event is, for example, to propose a subsequent action following an impressive event. The subsequent action following the impressive event is an emotion label on the outermost side of the emotional map, and for example, the action of "tolerance" or "acceptance" follows "love".

In the autonomous learning executed when the robot 100 is not talking with the user 10, the emotion change event is created using the sentence generation model by combining the emotions, situations, behaviors, and the like of the people appearing in the impressive memory and the robot.

Assuming that all emotion values are expressed by a six-grade evaluation of 0 to 5, consider a case where event data "a friend was beaten and looked displeased" is stored in the history data 222 as impressive event data. Here, it is assumed that the friend refers to the user 10, the emotion of the user 10 is "disgust", and 5 is included as the value indicating "disgust". Furthermore, it is assumed that the emotion of the robot 100 is "anxiety", and 4 is included as the value indicating "anxiety".

The robot 100 can continue to grow with various parameters by performing autonomous processing while not talking with the user 10. Specifically, from the history data 222, for example, as the uppermost event data arranged in descending order of emotion values, event data of "a friend was beaten and looked displeased" is loaded. It is assumed that "anxiety" at a strength of 4 is associated with the loaded event data as the emotion of the robot 100, and here, "disgust" at a strength of 5 is associated with the emotion of the user 10 who is a friend. If the current emotion value of the robot 100 is "relief" at a strength of 3 before loading, the influence of "anxiety" at a strength of 4 and "disgust" at a strength of 5 is added after loading, and the emotion value of the robot 100 may change to "sorrow" meaning disappointing (regretful). At this time, since the "sorrow" is an emotion for encouraging learning, the robot 100 determines to remember event data as the robot action and creates an emotion change event. At this time, the information input to the sentence generation model is a text representing impressive event data, and in the present example, "a friend was beaten and looked displeased". Furthermore, in the emotional map, there is an emotion of "disgust" on the innermost side, and an "attacking" is predicted on the outermost side as an action corresponding to the emotion, and thus, in the present example, an emotion change event is created so as to avoid a friend from "attacking" someone.

For example, information of impressive event data can be used to solve the filling problem to automatically generate the following input text.

"The user was beaten. At that time, the user felt intense disgust. The robot was very anxious. Please provide 30 characters or less of the lines to say when the robot next meets the user. However, please make sure that it is not related to the time of meeting. Please avoid direct expression. Provide three candidates.

### <Expected Format>

Candidate 1: (words that the robot should speak to the user)
Candidate 2: (words that the robot should speak to the user)
Candidate 3: (words that the robot should speak to the user) "

At this time, the output of the sentence generation model is, for example, as follows.
"Candidate 1: Are you OK? I was concerned about what happened yesterday.
Candidate 2: I was concerned about what happened yesterday. What should I do?
Candidate 3: I was worried. Can you tell me something?"

Furthermore, the robot 100 may automatically generate the following input text for the information obtained by creating the emotion change event.

"In a case where "the user was beaten", how does the user feel when the next message is sent to the user? It is assumed that the user's emotion is in the form of "joy A, anger B, sorrow C, and cheerful D", and A to D are integers of six-grade evaluation from 0 to 5.
Candidate 1: Are you OK? I was concerned about what happened yesterday.
Candidate 2: I was concerned about what happened yesterday. What should I do?
Candidate 3: I was worried. Can you tell me something?"

At this time, the output of the sentence generation model is, for example, as follows.

"The user's emotions may be as follows.
Candidate 1: joy 3, anger 1, sorrow 2, cheerful 2
Candidate 2: joy 2, anger 1, sorrow 3, cheerful 2
Candidate 3: joy 2, anger 1, sorrow 3, cheerful 3"

In this manner, the robot 100 may execute the process of thinking after creating the emotion change event.

Finally, the robot 100 may create an emotion change event using the candidate 1 that the person is most likely to enjoy among the plurality of candidates, store the emotion change event in the action schedule data 224, and prepare for the next meeting with the user 10.

As described above, even when not having a conversation with a family or a friend, the emotion value of the robot is continuously determined using the information of the history data 222 in which the impressive event data is stored, and when the emotion encouraging the learning is reached, the robot 100 executes autonomous learning when not having a conversation with the user 10 according to the emotion of the robot 100, and continues to update the history data 222 and the action schedule data 224.

The above is an example using the emotion value. However, in the emotional map, the emotion can be generated from the amount of hormone secreted and the event type. Therefore, the values associated with the impressive event data may be the type of hormone, the amount of hormone secreted, and the type of event.

Hereinafter, specific examples will be described.

For example, even when not talking with the user, the robot 100 searches for information regarding a topic or hobby of interest to the user.

For example, even when not talking with the user, the robot 100 searches for information regarding a birthday or an anniversary of the user and considers a congratulatory message.

For example, even when not talking with the user, the robot 100 searches for a review of a place that the user wants to go to, food, or product.

For example, even when not talking with the user, the robot 100 searches for weather information and provides advice suitable for the user's schedule or plan.

For example, even when not talking with the user, the robot 100 searches for information on local events and festivals and proposes the information to the user.

For example, even when not talking with the user, the robot 100 searches for a game result or news of a sport that the user is interested in and provides a topic.

For example, even when not talking with the user, the robot 100 searches and introduces information of the user's favorite music or artist.

For example, even when not talking with the user, the robot 100 searches for information regarding a social problem or news that the user is interested in and provides an opinion.

For example, even when not talking with the user, the robot 100 searches for information regarding the user's hometown or birthplace and provides a topic.

For example, even when not talking with the user, the robot 100 searches for information of the user's work or school and provides advice.

The robot 100 searches and introduces information of books, comics, movies, and drama in which the user is interested even when not talking with the user.

For example, even when not talking with the user, the robot 100 searches for information regarding the health of the user and provides advice.

For example, even when not talking with the user, the robot 100 searches for information regarding travel planning of the user and provides advice.

For example, even when not talking with the user, the robot 100 searches for information regarding repair or maintenance of the user's house or car and provides advice.

For example, even when not talking with the user, the robot 100 searches for information on beauty and fashion in which the user is interested and provides advice.

For example, even when not talking with the user, the robot 100 searches for information of the pet of the user and provides advice.

For example, even when not talking with the user, the robot 100 searches for and proposes information of contests and events related to the user's hobby or work.

For example, even when not talking with the user, the robot 100 searches for information of the user's favorite eatery or restaurant and proposes the information.

For example, even when not talking with the user, the robot 100 collects information and provides advice regarding important decisions related to the user's life.

For example, even when not talking with the user, the robot 100 searches for information regarding a person the user is worried about and provides advice.

### [Modification]

In the action control system of the first embodiment described above, the action determination unit 236 determines the action of the robot 100 using the emotion of the user 10 or the emotion of the robot 100 and the action determination model, but the present disclosure is not limited thereto. Specifically, for example, the tendency of the user's emotion may be estimated on the basis of the transition of the user's emotion determined by the emotion determination unit 232, and the action of the robot may be determined by further using the estimated tendency of the user's emotion. Therefore, hereinafter, as a modification of the first embodiment, an action control system and a method of generating learning data further using a tendency of a user's emotion will be described.

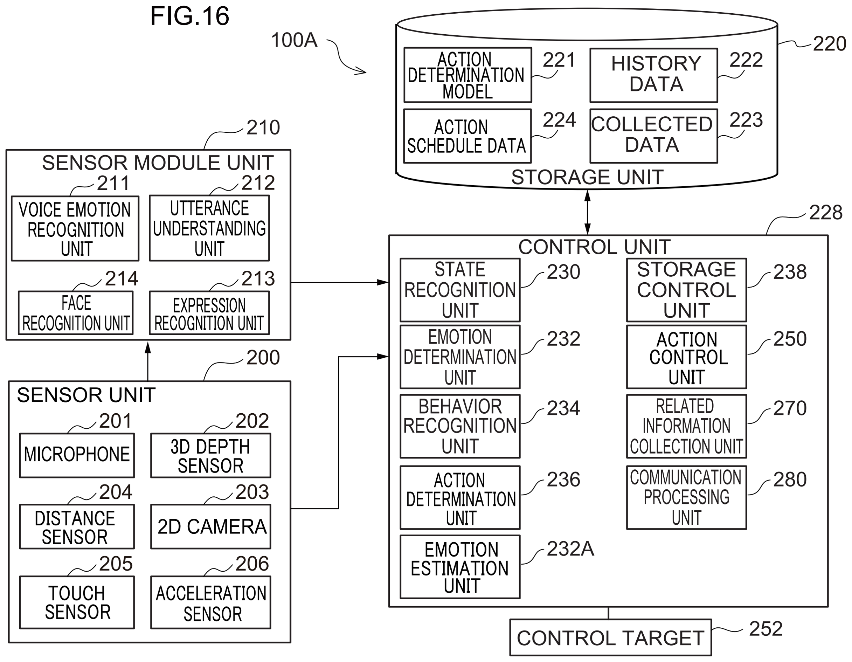

Fig. 16 schematically illustrates a functional configuration of a robot 100A according to a modification of the first embodiment. As illustrated in Fig. 16, the robot 100A of the action control system according to the present modification is different from the robot 100 described above in that an emotion estimation unit 232A is further included in a control unit 228B, and is substantially the same as the robot 100 in other configurations. Therefore, in the following description, the same components as those of the first embodiment will be denoted by the same reference numerals, the description thereof will be omitted, and the configuration unique to the present modification will be mainly described.

The emotion estimation unit 232A estimates the tendency of the user's emotion from the transition of the emotion of the user 10. The emotion estimation unit 232A can use a trained neural network to estimate the tendency of the user's emotion. The trained neural network used in the emotion estimation unit 232A is an example of a learning model, and may be one that learns the transition of the user's emotion, and specifically, may be one that infers the tendency of the user's emotion by inputting the user's emotion. Furthermore, the tendency of the user's emotion may be information indicating how the emotion of the user 10 tends to transition in the future.

The input information input to the above-described trained neural network can be information related to the transition of the emotion of the user 10, specifically, position information obtained by mapping a plurality of emotion values of the user 10 determined in the emotion determination unit 232 in the past on the emotion map. Furthermore, in the training of the neural network, it is possible to use vector information specifying a change in position information in which the user's emotion determined by the emotion determination unit 232 is mapped on the emotion map.

The storage unit 220 can store the vector information described above, for example, as part of the history data 222. Furthermore, the history data 222 may include position information obtained by mapping a plurality of emotion values determined in the emotion determination unit 232 in the past on the emotion map. The position information and the vector information may be collected and stored for each of a plurality of users in the storage unit 220, or may be collected and stored without identifying a user.

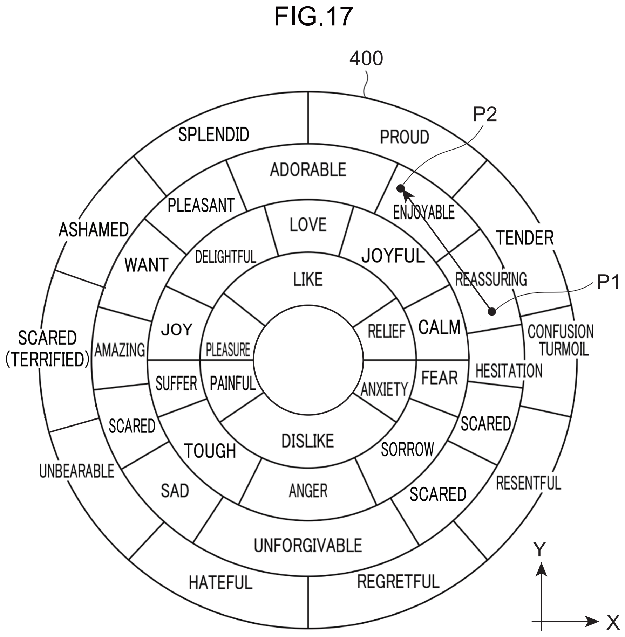

Next, the position information and the vector information mapped on the emotion map stored in the storage unit 220 will be described. Fig. 17 illustrates a state in which a plurality of pieces of position information is plotted on the emotion map 400 illustrated in Fig. 5.

The mapped position information can be specified by, for example, an X coordinate and a Y coordinate representing an arbitrary point on the emotion map 400. Then, the position information can be plotted as an arbitrary point on the emotion map 400. The point may be a center point of a plurality of emotion values specified on the basis of the analysis result of the sensor module unit 21 and the state of the user 10 recognized by the state recognition unit 230 in the emotion determination unit 232, or may be a point corresponding to the strongest emotion among the plurality of emotion values.

Fig. 17 illustrates a point P1 where the emotion of the user 10 determined by the emotion determination unit 232 at an arbitrary time point is plotted on the emotion map 400, and a point P2 where the emotion of the user 10 determined again by the emotion determination unit 232 is plotted after a predetermined time has elapsed after the point P1 is plotted. From the position information illustrated in Fig. 17, the user 10 at this time can specify that the emotion has transitioned so that the "enjoyable" emotion increases after the "reassuring" emotion increases.

At this time, the storage unit 220 stores a position shifted from the point P1 to the point P2 as a part of the history data 222 as vector information V1. Note that a period from when the point P1 is plotted until when the point P2 is plotted may be set to an interval equal to or longer than the sampling rate set in the emotion determination unit 232.

The vector information such as the vector information V1 described above is stored in the storage unit 220 every time the vector information is generated at an arbitrary timing. The plurality of pieces of vector information stored as a part of the history data 222 can be used as learning data for learning of the neural network that estimates the tendency of the user's emotion. In other words, the present disclosure can provide a method for generating learning data for use in learning of a neural network as a learning model for estimating a tendency of a user's emotion, the method including: determining a user's emotion; and storing a transition of the determined user's emotion as vector information indicating a change in position information in which the user's emotion is mapped on an emotion map.

When the position information obtained by plotting the user's emotion collected at an arbitrary timing on the emotion map 400 is input to the neural network trained using the learning data generated by the above-described method, the user's emotion tendency can be estimated. The estimation result of the neural network can be output as, for example, text information indicating the tendency of the user's emotion. The text information output in this manner can be used in the action determination unit 236 as information indicating the tendency of the user's emotion.

The action determination unit 236 in the present modification generates the action content of the robot by using the text indicating the tendency of the user's emotion estimated by the emotion estimation unit 232A and adding a fixed sentence for inquiry about the action content of the robot corresponding to the behavior of the user in addition to the text indicating the behavior of the user, the user's emotion, and the robot's emotion, and inputting the text to the sentence generation model having the interaction function. Since the action content of the robot has already been described in detail in the first embodiment, the description thereof will be omitted here.

By the action determination unit 236 determining the action by the above-described method, the robot 100A of the present modification can change the action of the robot according to the tendency of the user's emotion. Therefore, it is possible to realize a reaction that precedes the user's feeling. Furthermore, since the tendency of the user's emotion is reflected in the action of the robot 100A, an action suitable for the characteristic of the user's emotion can be performed. Then, the user has an impression that the robot has personality, and is promoted to take a behavior such as talking to the robot.

### [Second Embodiment]

In a second embodiment, the robot 100 is applied to a control device mounted on a stuffed toy or connected wirelessly or by wire to a control target device (speaker or camera) mounted on the stuffed toy. Note that parts having the same configurations as those of the first embodiment are denoted by the same reference numerals, and description thereof is omitted.

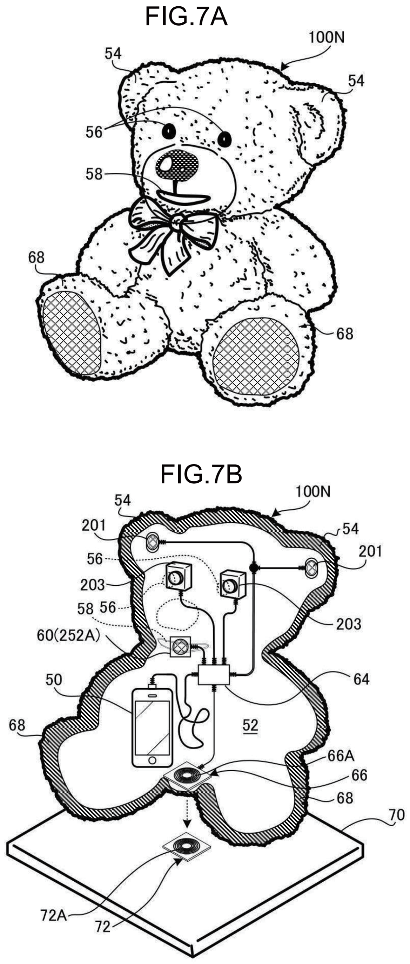

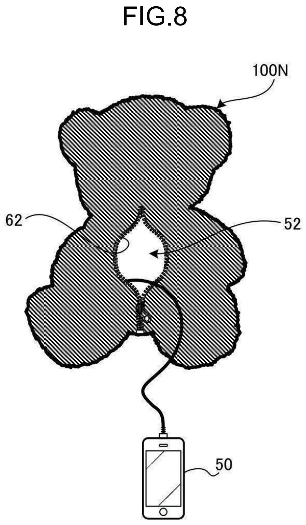

Specifically, the second embodiment is configured as follows. For example, the robot 100 is applied to a housemate (specifically, stuffed toy 100N illustrated in Figs. 7 and 8) who advances an interaction with the user 10 on the basis of information regarding daily life while spending daily life with the user 10 or provides information matching the hobby of the user 10. In the second embodiment, an example in which a control portion of the robot 100 is applied to the smartphone 50 will be described.

The smartphone 50 functioning as a control portion of the robot 100 is detachable from the stuffed toy 100N having a function as an input/output device of the robot 100, and the input/output device and the accommodated smartphone 50 are connected inside the stuffed toy 100N.

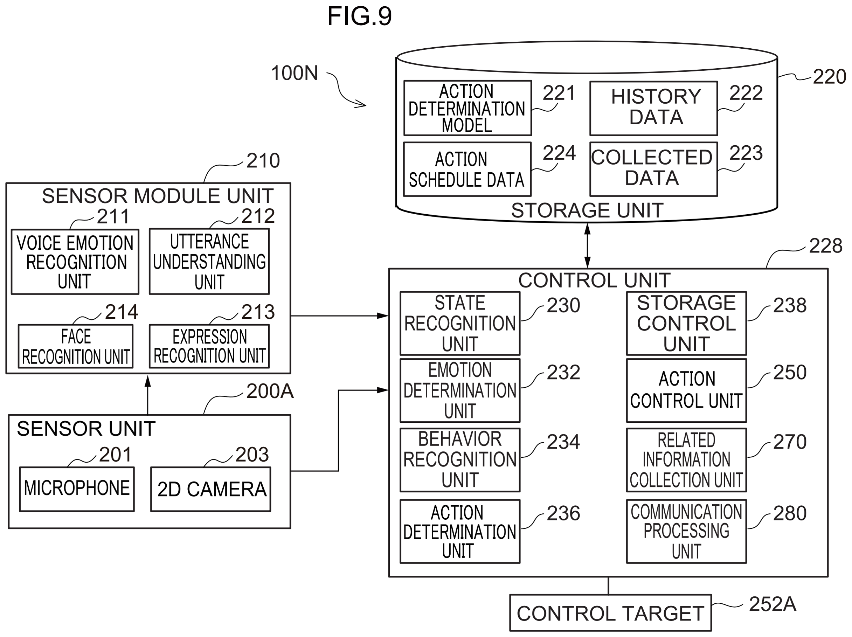

As illustrated in Fig. 7A, in the present embodiment (that is, other embodiments), the stuffed toy 100N has a shape of a bear covered with a cloth fabric having a soft appearance, and a sensor unit 200A and a control target 252A are arranged as input/output devices in a space portion 52 formed inside the stuffed toy 100N (see Fig. 9). The sensor unit 200A includes a microphone 201 and a 2D camera 203. Specifically, as illustrated in Fig. 7B, in the space portion 52, the microphone 201 of the sensor unit 200 is disposed in a portion corresponding to the ear 54, the 2D camera 203 of the sensor unit 200 is disposed in a portion corresponding to the eye 56, and the speaker 60 constituting a part of the control target 252A is disposed in a portion corresponding to the mouth 58. Note that the microphone 201 and the speaker 60 are not necessarily separated from each other, and may be an integrated unit. In the case of the unit, it is preferable to arrange the unit at a position where the utterance can be heard naturally, such as the position of the nose of the stuffed toy 100N. Although the case where the stuffed toy 100N has an animal shape has been described as an example, the present invention is not limited thereto. The stuffed toy 100N may have a shape of a specific character.

Fig. 9 schematically illustrates a functional configuration of the stuffed toy 100N. The stuffed toy 100N includes a sensor unit 200A, a sensor module unit 210, a storage unit 220, a control unit 228, and a control target 252A.

The smartphone 50 accommodated in the stuffed toy 100N of the present embodiment executes processing similar to that of the robot 100 of the first embodiment. That is, the smartphone 50 has a function as the sensor module unit 210, a function as the storage unit 220, and a function as the control unit 228 illustrated in Fig. 9.

As illustrated in Fig. 8, a fastener 62 is attached to a part (for example, back portion) of the stuffed toy 100N, and the outside and the space portion 52 communicate with each other by opening the fastener 62.

Here, the smartphone 50 is accommodated in the space portion 52 from the outside and is connected by a USB to each input/output device via a USB hub 64 (see Fig. 7B), so that it is possible to have a function equivalent to that of the robot 100 of the first embodiment.

A non-contact power receiving plate 66 is connected to the USB hub 64. A power receiving coil 66A is incorporated in the power receiving plate 66. The power receiving plate 66 is an example of a wireless power receiving unit that receives wireless power supply.

The power receiving plate 66 is disposed near root portions 68 of both feet of stuffed toy 100N, and is located closest to a placement base 70 when stuffed toy 100N is placed on the placement base 70. The placement base 70 is an example of an external wireless power transmitter.

The stuffed toy 100N placed on the placement base 70 can be appreciated as an ornament in a natural state.

In addition, this root portion is formed to be thinner than the surface layer thickness of the stuffed toy 100N in other parts, and is held in a state closer to the placement base 70.

The placement base 70 includes a charging pad 72. A power transmitting coil 72A is incorporated in the charging pad 72. When the power transmitting coil 72A transmits a signal to search the power receiving coil 66A of the power receiving plate 66, and the power receiving coil 66A is found, a current flows through the power transmitting coil 72A to generate a magnetic field, and the power receiving coil 66A reacts to the magnetic field to start electromagnetic induction. As a result, a current flows through the power receiving coil 66A, and power is stored in a battery (not illustrated) of the smartphone 50 via the USB hub 64.

That is, since the smartphone 50 is automatically charged by placing the stuffed toy 100N as an ornament on the placement base 70, it is not necessary to take out the smartphone 50 from the space portion 52 of the stuffed toy 100N for charging.

In the second embodiment, the smartphone 50 is accommodated in the space portion 52 of the stuffed toy 100N and connected by wire (USB connection), but the present invention is not limited thereto. For example, a control device having a wireless function (for example, "Bluetooth (registered trademark)") is accommodated in the space portion 52 of the stuffed toy 100N and the control device may be connected to the USB hub 64.

In this case, the smartphone 50 and the control device wirelessly communicate with each other without inserting the smartphone 50 into the space portion 52, and the external smartphone 50 is connected to each input/output device via the control device, so that it is possible to provide a function equivalent to that of the robot 100 of the first embodiment. Furthermore, the control device in which the control device is accommodated in the space portion 52 of the stuffed toy 100N and the external smartphone 50 may be connected by wire.

Furthermore, in the second embodiment, the stuffed toy 100N of a shape of a bear has been exemplified, but may be another animal, a doll, or a shape of a specific character. Further, the clothes may be changeable. Furthermore, the material of the skin is not limited to the cloth fabric, and may be other materials such as soft vinyl, but is preferably a soft material.

Furthermore, a monitor may be attached to the skin of the stuffed toy 100N, and the control target 252 that provides information to the user 10 through vision may be added. For example, the eyes 56 may be used as a monitor to express joy, anger, sorrow, and cheerful by the image reflected in the eye, or a window through which the monitor of the built-in smartphone 50 can be seen may be provided in the abdomen. Furthermore, the eyes 56 may be used as a projector to express joy, anger, sorrow, and cheerful by an image projected on a wall surface.

In addition, the backchanneling method may be determined by the backchanneling processing described in the first embodiment, and the stuffed toy 100N may give a backchanneling response. For example, a backchanneling response may be made by a voice emitted from the speaker 60. Furthermore, for example, a monitor may be attached to the skin of the stuffed toy 100N, a character of the stuffed toy 100N may be displayed on the monitor, and a character in the monitor may perform a gesture to give a backchanneling response.

According to the second embodiment, the existing smartphone 50 is placed in the stuffed toy 100N, and the camera 203, the microphone 201, the speaker 60, and the like are extended from the place to appropriate positions via the USB connection.

Further, for wireless charging, the smartphone 50 and the power receiving plate 66 are connected via USB, and the power receiving plate 66 is disposed so as to be as far as possible from the inside of the stuffed toy 100N.

In order to use the wireless charging of the smartphone 50, it is necessary to arrange the smartphone 50 on the outside as much as possible when viewed from the inside of the stuffed toy 100N, and the stuffed toy 100N is rough when touched from the outside.

Therefore, the smartphone 50 is disposed at the center of the stuffed toy 100N as much as possible, and the wireless charging function (specifically, power receiving plate 66) is disposed outside as viewed from the inside of the stuffed toy 100N as much as possible. The camera 203, the microphone 201, the speaker 60, and the smartphone 50 receive wireless power supply via the power receiving plate 66.

Other configurations and effects of the stuffed toy 100N of the second embodiment are similar to those of the robot 100 of the first embodiment, and thus the description thereof will be omitted.

### [Third Embodiment]

In the first embodiment, the case where the action control system is applied to the robot 100 has been exemplified, but in a third embodiment, the robot 100 is used as an agent for interacting with a user, and the action control system is applied to an agent system. Note that parts having the same configurations as those of the first embodiment and the second embodiment are denoted by the same reference numerals, and description thereof is omitted.

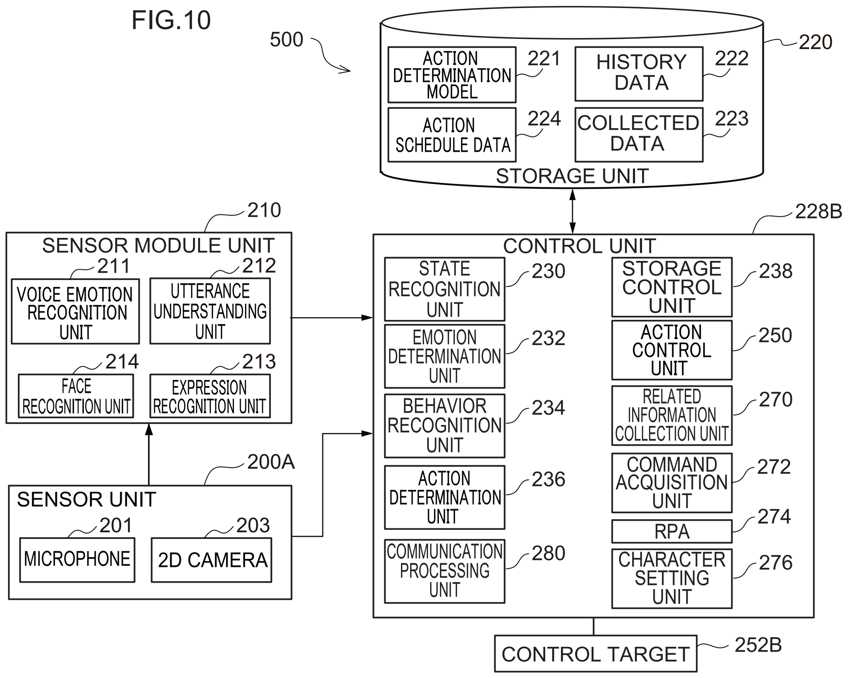

Fig. 10 is a functional block diagram of the agent system 500 configured using a part or all of the functions of the action control system.

The agent system 500 is a computer system that performs a series of actions according to the intention of the user 10 through an interaction performed with the user 10. The interaction with the user 10 can be performed by voice or text.

The agent system 500 includes a sensor unit 200A, a sensor module unit 210, a storage unit 220, a control unit 228B, and a control target 252B.

The agent system 500 can be mounted on, for example, a robot, a doll, a stuffed toy, a wearable terminal (for example, pendants, smartwatches, smart glasses), a smartphone, a smart speaker, an earphone, a personal computer, or the like. Furthermore, the agent system 500 may be implemented in a web server and used via a web browser operating on a communication terminal such as a smartphone possessed by the user.

The agent system 500 serves as, for example, a butler, a secretary, a teacher, a partner, a friend, a lover, or a teacher acting for the user 10. The agent system 500 not only interacts with the user 10 but also provides advice, guides to a destination, recommends according to user's preference, or the like. In addition, the agent system 500 performs reservation, order, payment, or the like to the service provider.

The emotion determination unit 232 determines an emotion of the user 10 and an emotion of the agent itself, similarly to the first embodiment. The action determination unit 236 determines an action of the robot 100 in consideration of emotions of the user 10 and the agent. In other words, the agent system 500 understands the emotion of the user 10 and reads the room to realize heartfelt support, assistance, advice, and service provision. Furthermore, the agent system 500 comforts, encourages, and energizes the user 10 by attending to the user's concern. Furthermore, the agent system 500 plays with the user 10 and draws a picture diary to remind the user of the past. The agent system 500 performs an action that increases the sense of happiness of the user 10. Here, the agent is an agent that operates on software.

The control unit 228B includes a state recognition unit 230, an emotion determination unit 232, a behavior recognition unit 234, an action determination unit 236, a storage control unit 238, an action control unit 250, a related information collection unit 270, a command acquisition unit 272, a robotic process automation (RPA) 274, a character setting unit 276, and a communication processing unit 280.

As in the first embodiment, the action determination unit 236 determines an utterance content of the agent for interacting with the user 10 as the agent's action. The action control unit 250 outputs the utterance content of the agent by at least one of voice and text through a speaker or a display as the control target 252B.

The character setting unit 276 sets a character of an agent when the agent system 500 interacts with the user 10 on the basis of designation from the user 10. In other words, the utterance content output from the action determination unit 236 is output through the agent having the set character. As the character, for example, a real famous person or a famous person such as an actor, an entertainer, an idol, or an athlete can be set. Furthermore, it is also possible to set a fictitious character appearing in a cartoon, a movie, or an animation. For example, it is possible to set, as the character of the agent, "Princess Anne" performed by "Audrey Hepburn" appearing in the movie "Roman Holiday". In a case where the agent's character is known, since the voice, the wording, the tone, and the personality of the character are known, the prompt setting in the character setting unit 276 is automatically performed only by the user 10 designating his/her favorite character. The voice, the wording, the tone of voice, and the personality of the set character are reflected in the interaction with the user 10. In other words, the action control unit 250 synthesizes a voice corresponding to the character set by the character setting unit 276, and outputs the utterance content of the agent by the synthesized voice. As a result, the user 10 can feel as if he/she is interacting with his/her favorite character (for example, a favorite actor).

In a case where the agent system 500 is mounted on a device having a display such as a smartphone, for example, an icon, a still image, or a moving image of an agent having a character set by the character setting unit 276 may be displayed on the display. The image of the agent is generated using, for example, an image synthesis technology such as 3D rendering. In the agent system 500, an interaction with the user 10 may be performed while the image of the agent makes a gesture according to the emotion of the user 10, the emotion of the agent, and the utterance content of the agent. Note that the agent system 500 may output only voice without outputting an image when interacting with the user 10.

In addition, the backchanneling method may be determined by the backchanneling processing described in the first embodiment, and the agent may give a backchanneling response. For example, the backchanneling response may be made by a voice emitted from a speaker. Furthermore, for example, the agent's character displayed on the display may perform a gesture to give a backchanneling response.

As in the first embodiment, the emotion determination unit 232 determines an emotion value indicating the emotion of the user 10 and an emotion value of the agent itself. In the present embodiment, the emotion value of the agent is determined instead of the emotion value of the robot 100. The emotion value of the agent itself is reflected in the emotion of the set character. When the agent system 500 interacts with the user 10, not only the emotion of the user 10 but also the emotion of the agent is reflected in the interaction. In other words, the action control unit 250 outputs the utterance content in a mode according to the emotion determined by the emotion determination unit 232.

Furthermore, the emotion of the agent is also reflected in a case where the agent system 500 performs an action toward the user 10. For example, in a case where the user 10 requests the agent system 500 to take a photograph, whether or not the agent system 500 takes a photograph in response to the request of the user is determined according to the degree of "sadness" emotion held by the agent. In a case where the character has a positive emotion, the character performs a favorable interaction or action with respect to the user 10, and in a case where the character has a negative emotion, the character performs a defiant interaction or action with respect to the user 10.

The history data 222 stores a history of the interaction performed between the user 10 and the agent system 500 as event data. The storage unit 220 may be realized by an external cloud storage. When interacting with the user 10 or performing an action toward the user 10, the agent system 500 decides the interaction content or the action content in consideration of the content of the interaction history stored in the history data 222. For example, the agent system 500 ascertains the hobby and the taste of the user 10 on the basis of the interaction history stored in the history data 222. The agent system 500 generates an interaction content matching the hobby and taste of the user 10 and provides a recommendation. The action determination unit 236 determines the utterance content of the agent on the basis of the interaction history stored in the history data 222. In the history data 222, personal information such as a name, an address, a telephone number, and a credit card number of the user 10 acquired through an interaction with the user 10 is stored. Here, an agent may spontaneously make an utterance of inquiry about whether or not to register personal information with the user 10, such as "Do you want to register the credit card number?", and the personal information may be stored in the history data 222 according to the answer of the user 10.

As described in the first embodiment, the action determination unit 236 generates the utterance content on the basis of the sentence generated using the sentence generation model. Specifically, the action determination unit 236 inputs the text or voice input by the user 10 and the emotions of both the user 10 and the character determined by the emotion determination unit 232 and the conversation history stored in the history data 222 to the sentence generation model, and generates the utterance content of the agent. At this time, the action determination unit 236 may further input the character's personality set by the character setting unit 276 to the sentence generation model to generate the utterance content of the agent. In the agent system 500, the sentence generation model is not located on the front-end side serving as a touch point with the user 10, but is used as a tool of the agent system 500.

The command acquisition unit 272 uses the output of the utterance understanding unit 212 to acquire a command of the agent from a voice or a text uttered from the user 10 through an interaction with the user 10. The command includes, for example, contents of actions to be executed by the agent system 500, such as information search, store reservation, ticket arrangement, purchase of a product or service, payment, route guidance to a destination, and recommendation provision.

The RPA 274 performs an action according to the command acquired by the command acquisition unit 272. For example, the RPA 274 performs actions related to use of the service provider, such as information search, store reservation, ticket arrangement, purchase of products/services, and payment.

The RPA 274 reads the personal information of the user 10 necessary for executing the action related to the use of the service provider from the history data 222 and uses the personal information. For example, when purchasing a product in response to a request from the user 10, the agent system 500 reads and uses personal information such as the name, address, telephone number, and credit card number of the user 10 stored in the history data 222. It is unkind to request the user 10 to input personal information in the initial setting, and it is also unpleasant for the user. In the agent system 500 according to the present embodiment, instead of requesting the user 10 to input personal information in the initial setting, the personal information acquired through the interaction with the user 10 is stored, and read and used as necessary. As a result, it is possible to avoid making the user feel uncomfortable, and convenience of the user is improved.

The agent system 500 executes the interactive processing by, for example, following steps 1 to 6.

(Step 1) The agent system 500 sets a character of the agent. Specifically, the character setting unit 276 sets the character of the agent when the agent system 500 interacts with the user 10 on the basis of the designation from the user 10.

(Step 2) The agent system 500 acquires the state of the user 10 including the voice or text input from the user 10, the emotion value of the user 10, the emotion value of the agent, and the history data 222. Specifically, the processing similar to steps S100 to S103 is performed to acquire the state of the user 10 including the voice or text input from the user 10, the emotion value of the user 10, the emotion value of the agent, and the history data 222.

(Step 3) The agent system 500 determines the utterance content of the agent.

Specifically, the action determination unit 236 inputs the text or voice input by the user 10 and the emotions of both the user 10 and the character specified by the emotion determination unit 232 and the conversation history stored in the history data 222 to the sentence generation model, and generates the utterance content of the agent.

For example, a fixed sentence "At this time, how do you answer as an agent?" is added to the text or voice input by the user 10 and the text indicating the emotions of both the user 10 and the character specified by the emotion determination unit 232 and the history of the conversation stored in the history data 222, and is input to the sentence generation model to acquire the utterance content of the agent.

As an example, in a case where the text or voice input by the user 10 is "Want to reserve a good Chinese restaurant nearby at 7:00 tonight", as an utterance content of the agent, "Understood.", and "This is a recommended restaurant. 1. AAAA. 2. BBBB. 3. CCCC. 4. DDDD" is obtained.

Furthermore, in a case where the text or voice input by the user 10 is "The fourth DDDD is good", as an utterance content of the agent, "Understood. I will make a reservation. How many seats do you want?" is obtained.

(Step 4) The agent system 500 outputs the utterance content of the agent.

Specifically, the action control unit 250 synthesizes a voice corresponding to the character set by the character setting unit 276, and outputs the utterance content of the agent by the synthesized voice.

(Step 5) The agent system 500 determines whether or not it is a timing to execute a command of the agent.

Specifically, the action determination unit 236 determines whether or not it is a timing to execute the command of the agent on the basis of the output of the sentence generation model. For example, in a case where the output of the sentence generation model includes that the agent executes the command, it is determined that it is the timing to execute the command of the agent, and the process proceeds to step 6. On the other hand, in a case where it is determined that it is not the timing to execute the command of the agent, the process returns to Step 2 described above.

(Step 6) The agent system 500 executes the command of the agent.

Specifically, the command acquisition unit 272 acquires the command of the agent from the voice or text uttered from the user 10 through the interaction with the user 10. Then, the RPA 274 performs an action corresponding to the command acquired by the command acquisition unit 272. For example, in a case where the command is "information search", information search is performed by a search site using a search query obtained through an interaction with the user 10 and an application programming interface (API). The action determination unit 236 inputs the search result to the sentence generation model and generates the utterance content of the agent. The action control unit 250 synthesizes a voice corresponding to the character set by the character setting unit 276, and outputs the utterance content of the agent by the synthesized voice.

Furthermore, in a case where the command is "store reservation", the reservation is made by making a phone call to the store of the reservation destination by a phone software, using the reservation information obtained through the conversation with the user 10, the store information of the reservation destination, and the API. At this time, the action determination unit 236 acquires the utterance content of the agent with respect to the voice input from the conversation partner using the sentence generation model having the interaction function. Then, the action determination unit 236 inputs the result of the store reservation (in other words, whether or not the reservation is successful) to the sentence generation model, and generates the utterance content of the agent. The action control unit 250 synthesizes a voice corresponding to the character set by the character setting unit 276, and outputs the utterance content of the agent by the synthesized voice.

Then, the process returns to Step 2 described above.

In step 6, the result of the action (for example, store reservation) executed by the agent is also stored in the history data 222. The result of the action executed by the agent stored in the history data 222 is used by the agent system 500 to ascertain the hobby or preference of the user 10. For example, in a case where the same store is reserved a plurality of times, it is recognized that the user 10 likes the store or the reservation content such as the reserved time zone, the content of the course, and the fee is used as a criterion for choosing the store at the time of the next reservation.

In this manner, the agent system 500 can execute interactive processing and perform an action related to use of the service provider as necessary.

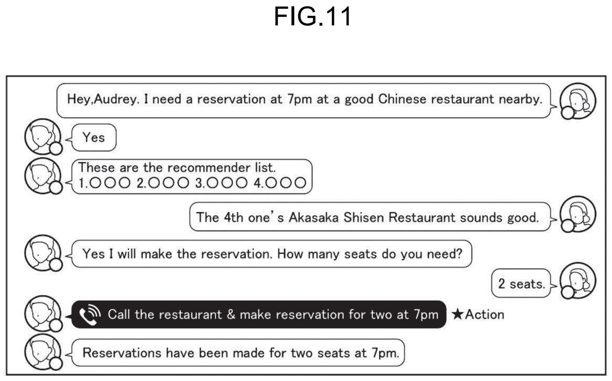

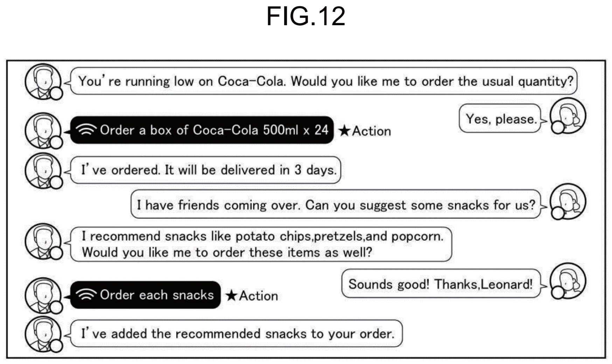

Figs. 11 and 12 are diagrams illustrating an example of the operation of the agent system 500. Fig. 11 illustrates an aspect in which the agent system 500 makes a restaurant reservation through an interaction with the user 10. In Fig. 11, the utterance content of the agent is illustrated on the left side, and the utterance content of the user 10 is illustrated on the right side. The agent system 500 can ascertain a preference of the user 10 based on an interaction history with the user 10, provide a recommendation list of restaurants that match the preference of the user 10, and perform a reservation of a selected restaurant.

On the other hand, Fig. 12 illustrates an aspect in which the agent system 500 accesses the mail order site through the interaction with the user 10 to purchase the product. In Fig. 12, the utterance content of the agent is illustrated on the left side, and the utterance content of the user 10 is illustrated on the right side. The agent system 500 can estimate the remaining amount of the beverage stocked by the user on the basis of the interaction history with the user 10, and can propose and execute the purchase of the beverage for the user 10. Furthermore, the agent system 500 can ascertain the preference of the user on the basis of the past interaction history with the user 10, and recommend a snack that the user likes. In this manner, the agent system 500 supports the daily life of the user 10 by performing various actions such as restaurant reservation or product purchase payment while communicating with the user 10 as an agent such as a butler.

Note that other configurations and operations of the agent system 500 of the third embodiment are similar to those of the robot 100 of the first embodiment, and thus description thereof is omitted.

### [Fourth Embodiment]

In the fourth embodiment, the agent system is applied to smart glasses. Note that parts having the same configurations as those of the first to third embodiments are denoted by the same reference numerals, and description thereof is omitted.

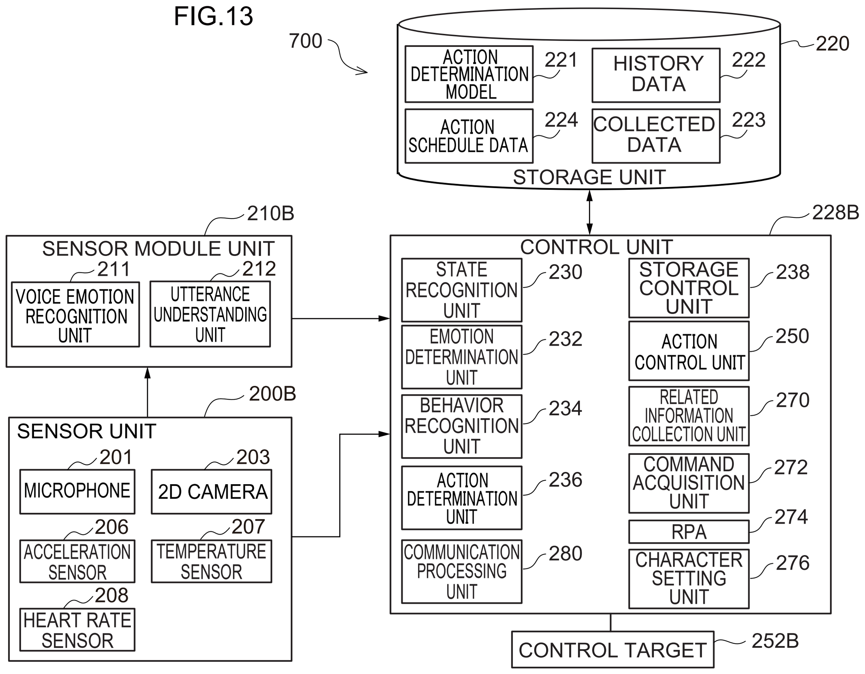

Fig. 13 is a functional block diagram of the agent system 700 configured using a part or all of the functions of the action control system.

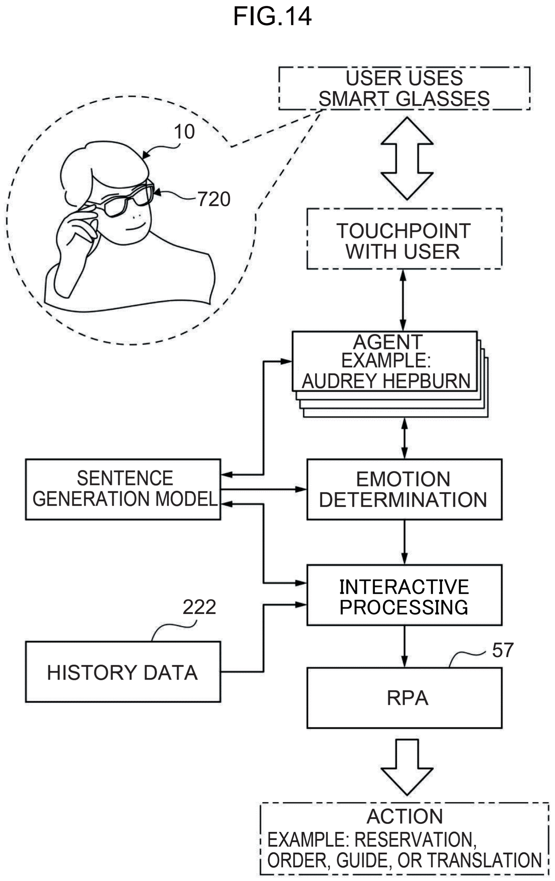

As illustrated in Fig. 14, the smart glasses 720 are glasses-type smart devices, and are worn by the user 10 similarly to general glasses. The smart glasses 720 are an example of an electronic device and a wearable terminal.

The smart glasses 720 include an agent system 700. The display included in the control target 252B displays various types of information to the user 10. The display is, for example, a liquid crystal display. The display is provided, for example, in a lens portion of the smart glasses 720, and the display content can be visually recognized by the user 10. The speaker included in the control target 252B outputs a voice indicating various types of information to the user 10. The smart glasses 720 include a touch panel (not illustrated), and the touch panel receives an input from the user 10.

The acceleration sensor 206, the temperature sensor 207, and the heart rate sensor 208 of the sensor unit 200B detect the state of the user 10. Note that these sensors are merely examples, and it is a matter of course that other sensors may be mounted in order to detect the state of the user 10.

The microphone 201 acquires a voice uttered by the user 10 or an environmental sound around the smart glasses 720. The 2D camera 203 can image the surroundings of the smart glasses 720. The 2D camera 203 is, for example, a CCD camera.

The sensor module unit 210B includes a voice emotion recognition unit 211 and an utterance understanding unit 212. The communication processing unit 280 of the control unit 228B controls communication between the smart glasses 720 and the outside.

Fig. 14 is a diagram illustrating an example of a usage mode of the agent system 700 by the smart glasses 720. The smart glasses 720 realize provision of various services to the user 10 using the agent system 700. For example, when the smart glasses 720 are operated (for example, voice is input to a microphone, or a touch panel is tapped with a finger) by the user 10, the smart glasses 720 start to use the agent system 700. Here, using the agent system 700 includes that the smart glasses 720 have the agent system 700 and use the agent system 700, and also includes a mode in which a part (for example, sensor module unit 210B, storage unit 220, and control unit 228B) of the agent system 700 is provided outside the smart glasses 720 (for example, server), and the smart glasses 720 communicate with the outside to use the agent system 700.

When the user 10 operates the smart glasses 720, a touch point is generated between the agent system 700 and the user 10. That is, service provision by the agent system 700 is started. As described in the third embodiment, in the agent system 700, the character (for example, the character of Audrey Hepburn) of the agent is set by the character setting unit 276.

The emotion determination unit 232 determines an emotion value indicating the emotion of the user 10 and an emotion value of the agent itself. Here, the emotion value indicating the emotion of the user 10 is estimated from various sensors included in the sensor unit 200B mounted on the smart glasses 720. For example, in a case where the heart rate of the user 10 detected by the heart rate sensor 208 is increased, the emotion values such as "anxiety r" and "fear" are estimated to be large.

Furthermore, as a result of measuring the body temperature of the user by the temperature sensor 207, for example, in a case where the body temperature exceeds the average body temperature, the emotion value such as "painful" or "tough" is estimated to be large. Furthermore, for example, in a case where it is detected by the acceleration sensor 206 that the user 10 performs some sport, the emotion value such as "enjoyable" is estimated to be large.

Furthermore, for example, the emotion value of the user 10 may be estimated from the voice or utterance content of the user 10 acquired by the microphone 201 mounted on the smart glasses 720. For example, in a case where the user 10 is raising his/her voice, the emotion value such as "anger" is estimated to be large.

In a case where the emotion value estimated by the emotion determination unit 232 is higher than a predetermined value, the agent system 700 causes the smart glasses 720 to acquire information regarding the surrounding situation. Specifically, for example, the 2D camera 203 is caused to capture an image or a moving image indicating a situation around the user 10 (for example, a person or an object around). Further, the microphone 201 is caused to record surrounding environmental sound. Examples of other information regarding the surrounding situation include date, time, position information, information indicating weather, and the like. The information regarding the surrounding situation is stored in the history data 222 together with the emotion value. The history data 222 may be realized by an external cloud storage. As described above, the surrounding situation obtained by the smart glasses 720 is stored in the history data 222 as a so-called life log in a state of being associated with the emotion value of the user 10 at that time.

In the agent system 700, information indicating the surrounding situation is stored in the history data 222 in association with the emotion value. As a result, the agent system 700 ascertains personal information such as the hobby, taste, or personality of the user 10. For example, in a case where an image indicating a situation of baseball watching is associated with an emotion value such as "joy" or "enjoyable", the hobby of the user 10 is baseball watching, and a favorite team or player is ascertained by the agent system 700 from the information stored in the history data 222.

Then, when interacting with the user 10 or performing an action toward the user 10, the agent system 700 determines the interaction content or the action content in consideration of the content of the surrounding situation stored in the history data 222. Note that, as a matter of course, the interaction content or the action content may be determined in consideration of the interaction history stored in the history data 222 as described above in addition to the surrounding situation.

As described above, the action determination unit 236 generates the utterance content on the basis of the sentence generated by the sentence generation model. Specifically, the action determination unit 236 inputs the text or voice input by the user 10, the emotions of both the user 10 and the agent determined by the emotion determination unit 232, the conversation history stored in the history data 222, the agent's personality, and the like to the sentence generation model, and generates the utterance content of the agent. Furthermore, the action determination unit 236 inputs the surrounding situation stored in the history data 222 to the sentence generation model, and generates the utterance content of the agent.

The generated utterance content is output by voice from a speaker mounted on the smart glasses 720 to the user 10, for example. In this case, a synthesized voice corresponding to the character of the agent is used as the voice. The action control unit 250 reproduces the voice quality of the agent's character (for example, Audrey Hepburn) to generate a synthesized voice or generate a synthesized voice (for example, in the case of a feeling of "anger", a voice in which tone is enhanced) according to the emotion of the character. Furthermore, the utterance content may be displayed on the display instead of the voice output or together with the voice output.

The RPA 274 executes an operation according to the command (for example, an agent command acquired from a voice or text uttered by the user 10 through interaction with the user 10). The RPA 274 performs actions related to use of the service provider, such as information search, store reservation, ticket arrangement, purchase of products/services, payment, route guidance, and translation.

Furthermore, as another example, the RPA 274 executes an operation of transmitting content input by voice of the user 10 (for example, a child) through interaction with the agent to the other party (for example, a parent). Examples of the transmission means include message application software, chat application software, mail application software, and the like.

When the operation by the RPA 274 is executed, for example, a voice indicating that the execution of the operation is finished is output from a speaker mounted on the smart glasses 720. For example, a voice such as "Reservation of the store is completed" is output to the user 10. Furthermore, for example, in a case where the reservation of the store is full, a voice such as "Reservation could not be made. What would you like to do?" is output to the user 10.

As described above, in the smart glasses 720, various services are provided to the user 10 by using the agent system 700. In addition, since the smart glasses 720 are worn by the user 10, the agent system 700 can be used in various scenes such as at home, at work, and at a place outside the house.

In addition, since the smart glasses 720 are worn by the user 10, the smart glasses are suitable for collecting a so-called life log of the user 10. Specifically, the emotion value of the user 10 is estimated on the basis of detection results by various sensors or the like mounted on the smart glasses 720 or recording results of the 2D camera 203 or the like. Therefore, the emotion value of the user 10 can be collected in various scenes, and the agent system 700 can provide a service or utterance content suitable for the emotion of the user 10.

Furthermore, in the smart glasses 720, the situation around the user 10 can be obtained by the 2D camera 203, the microphone 201, and the like. Then, these surrounding situations and the emotion values of the user 10 are associated with each other. As a result, it is possible to estimate what kind of emotion the user 10 has in what kind of situation. As a result, the accuracy in a case where the agent system 700 ascertains the liking/preference of the user 10 can be improved. Then, in the agent system 700, the liking/preference of the user 10 is accurately ascertained, so that the agent system 700 can provide a service or an utterance content suitable for the liking/preference of the user 10.

Furthermore, the agent system 700 can also be applied to other wearable terminals (specifically, an electronic device that can be worn on the body of the user 10, such as a pendant, a smart watch, an earring, a bracelet, or a hairband). In a case where the agent system 700 is applied to a smart pendant, a speaker as the control target 252B outputs a voice indicating various types of information to the user 10. The speaker is, for example, a speaker capable of outputting a voice having directivity. The speaker is set to have directivity toward the ear of the user 10. As a result, the voice is suppressed from reaching a person other than the user 10. The microphone 201 acquires a voice uttered by the user 10 or an environmental sound around the smart pendant. The smart pendant is worn so as to be carried from the neck of the user 10. Thus, the smart pendant is located relatively close to the mouth of the user 10 while being worn. This facilitates acquisition of a voice uttered by user 10.

Note that, in the above embodiment, the case where the robot 100 recognizes the user 10 using the face image of the user 10 has been described, but the disclosed technology is not limited to this aspect. For example, the robot 100 may recognize the user 10 using a voice uttered by the user 10, a mail address of the user 10, an ID of an SNS of the user 10, an ID card in which a wireless IC tag possessed by the user 10 is built, or the like.

The robot 100 is an example of an electronic device including an action control system. The application target of the action control system is not limited to the robot 100, and the action control system can be applied to various electronic devices. Furthermore, the function of the server 300 may be implemented by one or more computers. At least some functions of the server 300 may be implemented by a virtual machine. Furthermore, at least a part of the functions of the server 300 may be implemented in a cloud.

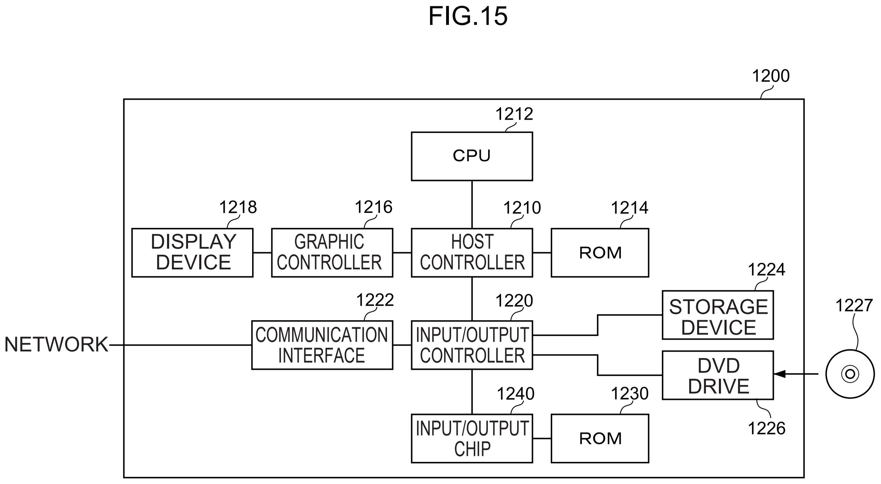

Fig. 15 schematically illustrates an example of a hardware configuration of a computer 1200 that functions as the smartphone 50, the robot 100, the server 300, and the agent systems 500 and 700. The program installed in the computer 1200 can cause the computer 1200 to function as one or more "units" of the apparatus according to the present embodiment, or cause the computer 1200 to execute an operation associated with the apparatus according to the present embodiment or one or more "units" thereof, and/or cause the computer 1200 to execute a process according to the present embodiment or a stage of the process. Such programs may be executed by a CPU 1212 to cause the computer 1200 to perform certain operations associated with some or all of the blocks in the flowcharts and block diagrams described herein.

The computer 1200 according to the present embodiment includes a CPU 1212, a RAM 1214, and a graphic controller 1216, which are mutually connected by a host controller 1210. The computer 1200 also includes input/output units such as a communication interface 1222, a storage device 1224, a DVD drive 1226, and an IC card drive, which are connected to the host controller 1210 via an input/output controller 1220. The DVD drive 1226 may be a DVD-ROM drive, a DVD-RAM drive, or the like. The storage device 1224 may be a hard disk drive, a solid state drive, or the like. The computer 1200 also includes a ROM 1230 and legacy input/output units such as a keyboard, which are connected to the input/output controller 1220 via an input/output chip 1240.

The CPU 1212 operates according to programs stored in the ROM 1230 and the RAM 1214, thereby controlling each unit. The graphic controller 1216 obtains image data generated by the CPU 1212 in a frame buffer or the like provided in the RAM 1214 or the graphic controller itself, and causes the image data to be displayed on the display device 1218.

The communication interface 1222 communicates with other electronic devices via a network. The storage device 1224 stores programs and data used by the CPU 1212 in the computer 1200. The DVD drive 1226 reads a program or data from a DVD-ROM 1227 or the like and provides the program or data to the storage device 1224. The IC card drive reads the program and data from the IC card and/or writes the program and data to the IC card.

The ROM 1230 stores therein a boot program executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The program is provided by a computer-readable storage medium such as a DVD-ROM 1227 or an IC card. The program is read from a computer-readable storage medium, installed in the storage device 1224, the RAM 1214, or the ROM 1230, which is also an example of a computer-readable storage medium, and executed by the CPU 1212. The information processing described in these programs is read by the computer 1200 and provides cooperation between the programs and the various types of hardware resources described above. The device or method may be configured by implementing operation or processing of information according to use of the computer 1200.

For example, in a case in which communication is performed between the computer 1200 and an external device, the CPU 1212 may execute a communication program loaded in the RAM 1214 and instruct the communication interface 1222 to perform communication processing on the basis of processing described in the communication program. Under the control of the CPU 1212, the communication interface 1222 reads transmission data stored in a transmission buffer area provided in a recording medium such as the RAM 1214, the storage device 1224, the DVD-ROM 1227, or the IC card, transmits the read transmission data to the network, or writes reception data received from the network to a reception buffer area or the like provided on the recording medium.

In addition, the CPU 1212 may cause the RAM 1214 to read all or a necessary portion of a file or database stored in an external recording medium such as the storage device 1224, a DVD drive 1226 (DVD-ROM 1227), an IC card, or the like, and may execute various types of processing on data on the RAM 1214. Next, the CPU 1212 may write back the processed data to the external recording medium.

Various types of information such as various types of programs, data, tables, and databases may be stored in a recording medium and subjected to information processing. The CPU 1212 may execute various types of processing on the data read from the RAM 1214, including various types of operations, information processing, condition determination, conditional branching, unconditional branching, information retrieval/replacement, and the like, which are described throughout the disclosure and specified by a command sequence of a program, and writes back the results to the RAM 1214. In addition, the CPU 1212 may search for information in a file, a database, or the like in the recording medium. For example, in a case in which a plurality of entries each having an attribute value of a first attribute associated with an attribute value of a second attribute is stored in the recording medium, the CPU 1212 may search for an entry in which the attribute value of the first attribute matches the specified condition from the plurality of entries, read the attribute value of the second attribute stored in the entry, and thereby acquire the attribute value of the second attribute associated with the first attribute satisfying the predetermined condition.

The program or software module described above may be stored in a computer-readable storage medium on the computer 1200 or in the vicinity of the computer 1200. Furthermore, a recording medium such as a hard disk or a RAM provided in a server system connected to a dedicated communication network or the Internet can be used as a computer-readable storage medium, thereby providing a program to the computer 1200 via the network.

The blocks in the flowcharts and block diagrams in this embodiment may represent stages of a process in which an operation is performed or "units" of a device that are responsible for performing the operation. Certain stages and "units" may be implemented by dedicated circuit, programmable circuit provided with computer-readable instructions stored on a computer-readable storage medium, and/or a processor provided with computer-readable instructions stored on a computer-readable storage medium. The dedicated circuits may include digital and/or analog hardware circuits, and may include integrated circuits (ICs) and/or discrete circuits. The programmable circuit may include reconfigurable hardware circuit including, for example, logical conjunction, logical disjunction, exclusive disjunction, NAND, NOR, and other logical operations, flip-flops, registers, and memory elements, such as field programmable gate arrays (FPGAs) and programmable logic arrays (PLAs).

A computer-readable storage medium may include any tangible device capable of storing instructions for execution by a suitable device, such that a computer-readable storage medium having instructions stored therein includes a product including instructions that may be executed to create means for performing the operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy disk (registered trademark), a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray disk (registered trademark), a memory stick, an integrated circuit card, and the like.

The computer-readable instructions may include either source code or object code written in any combination of one or more programming languages, including assembler instructions, instruction-set-architecture (ISA) instructions, machine instructions, machinedependent instructions, microcode, firmware instructions, state-setting data, or an object oriented programming language such as Smalltalk, JAVA (registered trademark), C++, or the like, and conventional procedural programming languages, such as the "C" programming language or similar programming languages.

The computer-readable instructions may be provided for a processor of general purpose computer, special purpose computer, or other programmable data processing device, or a programmable circuit, either locally or over a local area network (LAN), a wide area network (WAN), such as the Internet, or the like, to cause the processor of general purpose computer, special purpose computer, or other programmable data processing device, or the programmable circuit to execute the computer-readable instructions to generate means for performing the operations specified in the flowcharts or block diagrams. Examples of the processor include a computer processor, a processing unit, a microprocessor, a digital signal processor, a controller, a microcontroller, and the like.

### [Fifth Embodiment]

As a method of causing the robot to execute an appropriate action with respect to the behavior of the user, for example, an improvement method of estimating the user's emotion from the user's state and reflecting the user's emotion in the robot's action can be assumed. In this case, while it is possible to optimize the action of the robot, there is a need to present a change in the user's own emotion to the user or another user. Based on this point, a fifth embodiment of the present disclosure will be exemplarily described below.

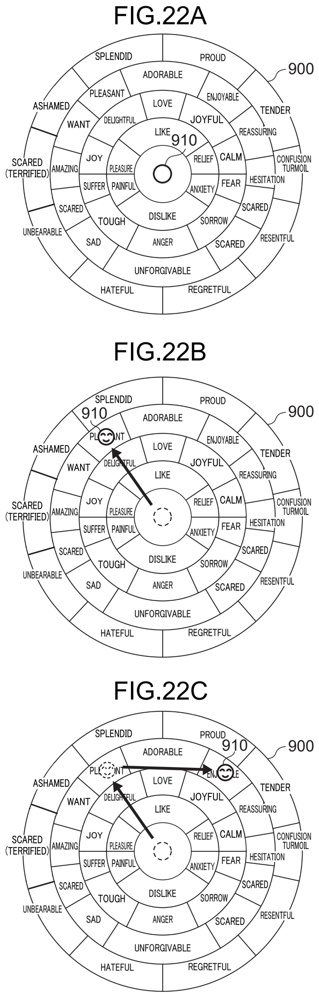

In a fifth embodiment, a display control device 800 that displays an emotion map 900 and an icon 910 (see Figs. 22B and 22C) indicating the position of the emotion of the user 10 on the basis of the information of the interaction with the user 10 will be described. Note that parts having the same configurations as those of the first to fourth embodiments are denoted by the same reference numerals, and description thereof is omitted. The emotion map 900 is an example of an "emotion map". The icon 910 is an example of a "predetermined marker."

### (Configuration)

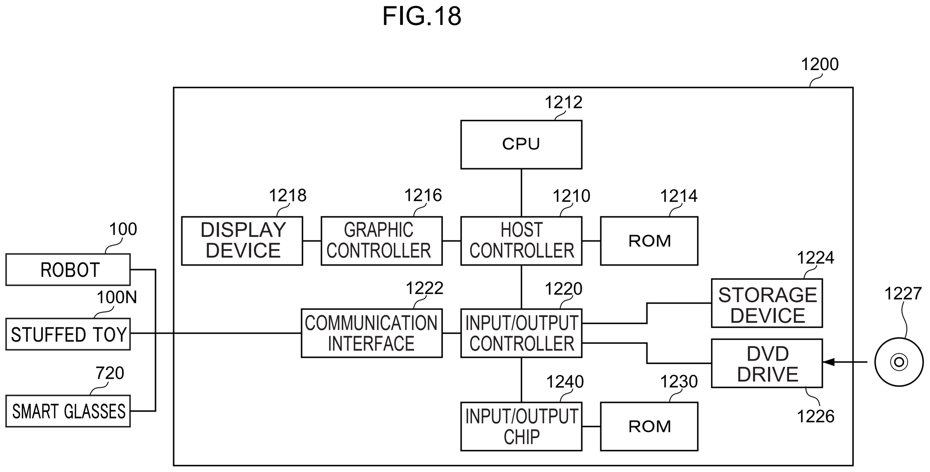

Fig. 18 schematically illustrates an example of a hardware configuration of a computer 1200 that functions as the display control device 800 according to the present embodiment.

The communication interface 1222 in Fig. 18 communicates with the robot 100 (see Fig. 1), the stuffed toy 100N (see Fig. 7), the smart glasses 720 (see Fig. 14), and the like via a network. In the present embodiment, a case of communicating with the robot 100 will be described as an example. Note that the electronic device with which the communication interface 1222 communicates is not limited to these electronic devices.

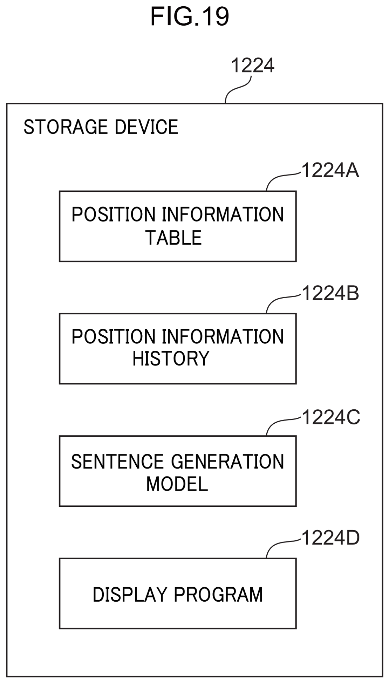

As illustrated in Fig. 19, the storage device 1224 of the present embodiment includes a position information table 1224A, a position information history 1224B, a sentence generation model 1224C, and a display program 1224D.

The position information table 1224A is an information table that stores emotion values and position information of the emotion map 900 in association with each other. The position information according to the present embodiment is values of an x coordinate and a y coordinate in a case where the center (hereinafter, referred to as "center") of the emotion map 900 is (0,0). For example, the emotion value of "pleasant" is stored in association with the coordinates of (70,-45), and the emotion value of "enjoyable" is stored in association with the coordinates of (70,45).

The position information history 1224B stores information including a history of positional information indicating the position of emotions of the user 10 on the emotion map 900. Specifically, the position information stored in the position information history 1224B is the position information stored in the position information table 1224A. The history of the position information is an example of a "history of changes in emotions".

The sentence generation model 1224C includes the large language model described above. As an example, the sentence generation model 1224C of the present embodiment is a learning model that learns a correspondence relationship between emotion values and position information on the emotion map 900.

The display program 1224D is a program that causes the display device 1218 to display information and executes transition display processing and advice display processing to be described later.

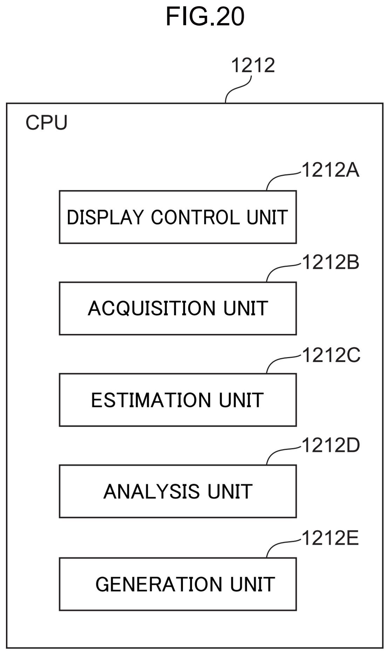

Fig. 20 is a diagram illustrating an example of functional blocks of the display control device 800 according to the present embodiment. As described above, the action control system illustrated in Fig. 2 can be applied to various electronic devices. Therefore, the display control device 800 of the present embodiment is configured using a part or all of the functions of the action control system. Furthermore, the action control system may include at least one of the display control device 800 and the robot 100.

As illustrated in Fig. 20, the display control device 800 of the present embodiment functions as a display control unit 1212A, an acquisition unit 1212B, an estimation unit 1212C, an analysis unit 1212D, and a generation unit 1212E by executing a display program 1224D.

The display control unit 1212A has a function of controlling display of information. Specifically, the display control unit 1212A displays the emotion map 900, the icon 910, the movement of the icon 910, a movement route 920 of the icon 910, and advice to the user 10 on the display device 1218. Here, the icon 910 is an icon displayed by moving between the emotion areas arranged in the emotion map 900. The advice is advice generated by a generation unit 1212E to be described later. The display device 1218 is an example of a "display device". The movement of the icon 910 is an example of "transition of marker". The movement route 920 of the icon 910 is an example of a "marker transition trajectory". The advice is an example of "advice".

In addition, the display control unit 1212A has a function of changing and displaying the icon 910. Specifically, the display control unit 1212A changes and displays the icon 910 according to the position on the emotion map 900. As an example, the icon 910 is an icon imitating an expression, and is an icon of a smiling face with the mouth closed when being at the position of "pleasant" (see Fig. 22B), and is an icon of a smiling face with the mouth opened when being at the position of "enjoyable" (see Fig. 22C). Note that the display control unit 1212A may display the icon 910 by gradually changing the icon 910 during the movement of the icon.

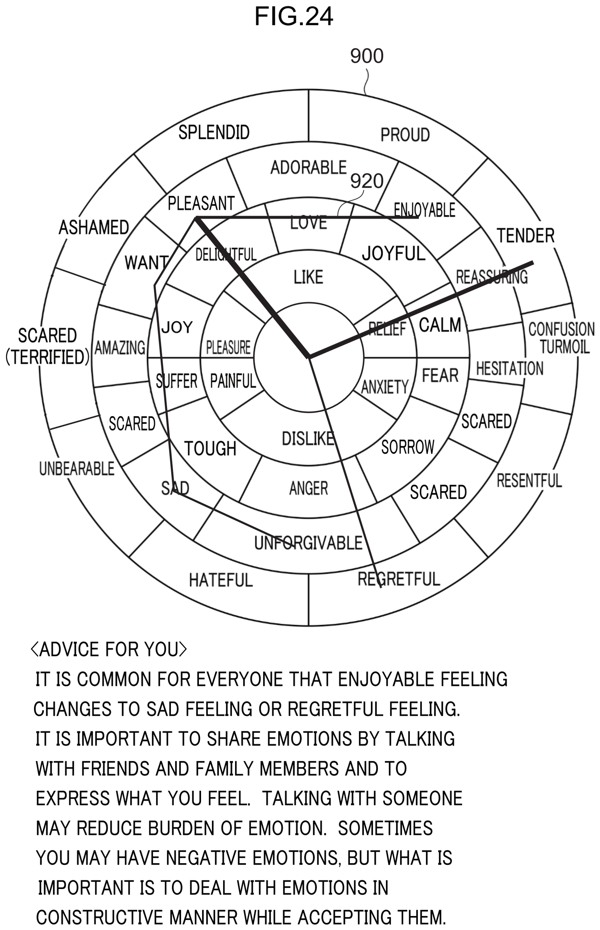

Then, the display control unit 1212A has a function of displaying the movement route 920 of the icon 910 in a highlighted manner. Specifically, the display control unit 1212A displays the movement route 920 in a highlighted manner on the basis of the number of movements or the movement frequency of the icon 910 of each movement route 920 analyzed by the analysis unit 1212D to be described later (see Fig. 24). As an example, the display control unit 1212A displays a straight line indicating the movement route 920 to be thicker as the movement route has a larger number of movements. In addition, the display control unit 1212A may display a straight line indicating the movement route 920 to be thicker as the movement route has a higher movement frequency.

The acquisition unit 1212B has a function of acquiring a conversation content with the user 10. Specifically, the acquisition unit 1212B acquires the conversation content of the robot 100, the stuffed toy 100N, the smart glasses 720, or the like with the user 10. As an example, the acquisition unit 1212B acquires the content in which the robot 100 and the user 10 are talking in real time. Note that the acquisition unit 1212B may acquire the content of a conversation between a plurality of users. The conversation content is an example of "conversation information".

Furthermore, the acquisition unit 1212B has a function of acquiring position information on the emotion map 900 corresponding to the emotion value of the user 10. Specifically, the acquisition unit 1212B acquires the position information on the emotion map 900 corresponding to the emotion value estimated by the estimation unit 1212C to be described later from the position information table 1224A (see Fig. 19).

Then, the acquisition unit 1212B has a function of acquiring a history of position information on the emotion map 900. Specifically, the acquisition unit 1212B acquires the history of the position information indicating the emotion of the user 10 from the position information history 1224B (see Fig. 19) stored in the storage device 1224.

The estimation unit 1212C has a function of estimating an emotion value of the user 10. Specifically, the estimation unit 1212C estimates the emotion value of the user 10 from the conversation content between the robot 100 and the user 10 acquired by the acquisition unit 1212B. Note that the estimation unit 1212C of the present embodiment estimates the emotion value of the user 10 using the sensor module unit 210, the state recognition unit 230, the emotion determination unit 232 (see Fig. 2), and the like of the action control system.

The analysis unit 1212D has a function of analyzing the number or frequency of movements of the icon 910 in a predetermined period. Specifically, the analysis unit 1212D analyzes the number of movements or the movement frequency of the icon 910 of each movement route 920 using the history of the position information acquired by the acquisition unit 1212B. The predetermined period is not particularly limited, but will be described as the latest 24 hours in the present embodiment.

The generation unit 1212E has a function of generating advice to the user 10. Specifically, the generation unit 1212E generates advice to the user 10 by inputting the history of the position information indicating the position of the emotion of the user 10 stored in the position information history 1224B (see Fig. 19) to the sentence generation model 1224C (see Fig. 19). Note that what is generated by the generation unit 1212E and displayed by the display control unit 1212A is not limited to advice, and may be personality diagnosis, warning, or the like.

### (Flow of Control)

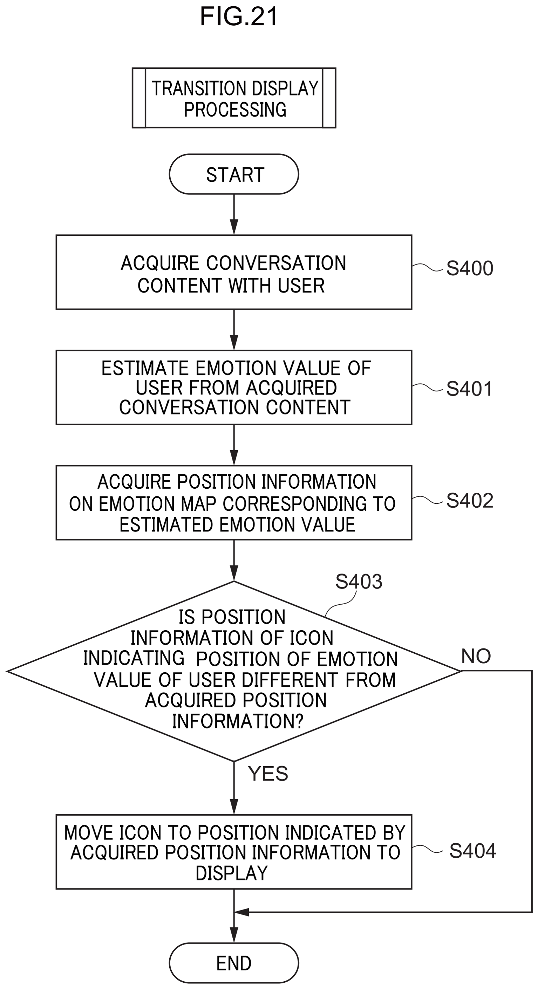

Fig. 21 is a flowchart illustrating an example of the flow of the transition display processing of displaying the transition of the icon 910. The transition display processing of the present embodiment is a process repeatedly executed during a conversation between the robot 100 and the user 10.

In step S400 of Fig. 21, the CPU 1212 acquires a conversation content with the user 10. Specifically, the CPU 1212 acquires conversation contents between the robot 100 and the user 10 from the robot 100 via the communication interface 1222 (see Fig. 18) in real time.

In step S401, the CPU 1212 estimates the emotion value of the user 10 from the acquired conversation content. Specifically, the CPU 1212 estimates the emotion value of the user 10 from the conversation content acquired in step S400. As an example, the CPU 1212 estimates that the emotion value of the user 10 is "enjoyable".

In step S402, the CPU 1212 acquires position information on the emotion map 900 corresponding to the estimated emotion value. Specifically, the CPU 1212 acquires the position information on the emotion map 900 corresponding to the emotion value of the user 10 estimated in step S401 from the position information table 1224A (see Fig. 19). As an example, the CPU 1212 acquires position information of (70,45) corresponding to the emotion value of "enjoyable".

In step S403, the CPU 1212 determines whether or not the position information of the icon 910 indicating the position of the emotion value of the user 10 is different from the acquired position information. Specifically, the CPU 1212 determines whether the position information of the position where the icon 910 is displayed is different from the position information acquired in step S402. When the CPU 1212 determines that they are different (step S403: YES), the process proceeds to step S404. On the other hand, when the CPU 1212 determines that they are not different (step S403: NO), the transition display processing ends.

In step S404, the CPU 1212 moves the icon 910 to the position indicated by the acquired position information and displays the icon. Specifically, the CPU 1212 moves the icon 910 to the position of the position information acquired in step S402 and displays the icon. In addition, the CPU 1212 changes and displays the icon 910 according to the position information to be moved. As an example, the CPU 1212 moves the icon 910 from the position of "pleasant" to the position of "enjoyable" on the emotion map 900, changes the icon to a smiling face icon with an opened mouth, and displays the icon. Then, the CPU 1212 ends the transition display processing.

### (Screen Display)

When the transition display processing described above is executed in the display control device 800, the CPU 1212 moves the icon 910 on the emotion map 900 and displays the icon on the display device 1218 as illustrated in Figs. 22A to 22C.

Figs. 22A to 22C are diagrams schematically illustrating examples of display in which the icon 910 moves on the emotion map 900 according to the fifth embodiment. Hereinafter, a situation in which the icon 910 is moved and displayed on the emotion map 900 of the present embodiment will be described. Note that the icon 910 indicated by a broken line indicates the position of the icon 910 before the movement, and the icon 910 indicated by a solid line indicates the current position of the icon 910. Arrows schematically indicate a moving direction and a distance of the icon 910. Hereinafter, the same applies to the icon represented by the broken line, the icon represented by the solid line, and the arrow.

First, as illustrated in Fig. 22A, the CPU 1212 displays the icon 910 at the center of the emotion map 900 in a case where the emotion value of the user 10 has not been estimated. Furthermore, since no emotion is assigned to the central portion of the emotion map 900, no expression indicating an emotion is displayed on the icon 910.

Next, as illustrated in Fig. 22B, when the CPU 1212 estimates that the emotion value of the user 10 is "pleasant", the CPU 1212 moves the icon 910 from the "center" to a position of "pleasant" and displays the icon. Further, the CPU 1212 displays the icon 910 moved to the position of "pleasant" in the emotion map 900 while changing the icon to a smiling face icon with the mouth closed.

Then, as illustrated in Fig. 22C, when the CPU 1212 estimates that the emotion value of the user 10 is "enjoyable", the CPU 1212 moves the icon 910 from the position of "pleasant" to the position of "enjoyable" and displays the icon. The CPU 1212 changes the icon 910 moved to the position of "enjoyable" in the emotion map 900 into an icon with a smiling face with an opened mouth and displays the icon. Note that when the CPU 1212 estimates that the emotion value of the user 10 remains "pleasant", the CPU 1212 does not move the icon 910.

As described above, the CPU 1212 moves the icon 910 each time the estimated emotion value of the user 10 changes, and changes and displays the icon 910 according to the position on the emotion map 900.

Note that the CPU 1212 may move the icon 910 to the "center" in a case where the emotion value of the user 10 has not been estimated for a predetermined time. Specifically, the predetermined time is a time determined by the type of the emotion to which the icon 910 has been moved last. As an example, the predetermined time is a time set according to the type of the emotion, such as 120 hours in a case where the type of the emotion is "sadness", 60 hours in a case where the type of the emotion is "hateful", and 2 hours in a case where the type of the emotion is "anger".

### (Flow of Control)

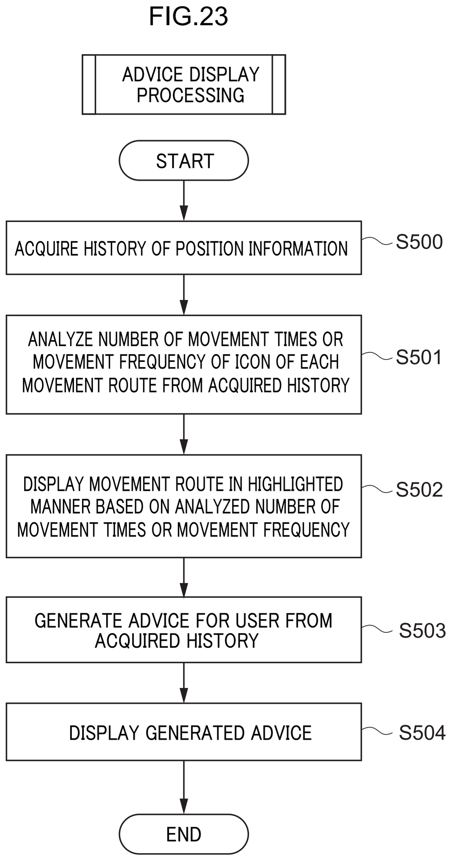

Fig. 23 is a flowchart illustrating an example of a flow of advice display processing of displaying advice to the user 10. The advice display processing is, for example, a process executed in accordance with an instruction from the user 10.

In step S500 of Fig. 23, the CPU 1212 acquires the history of the position information. Specifically, CPU 1212 acquires the history of the position information of user 10 during the predetermined period stored in position information history 1224B (see Fig. 19). As an example, the CPU 1212 acquires a history of the position information of the user 10 stored in the last 24 hours.

In step S501, the CPU 1212 analyzes the number of movements or the movement frequency of the icon 910 of each movement route 920 from the acquired history. Specifically, the CPU 1212 analyzes the number of movements or the movement frequency of the icon 910 in each movement route 920 from the history acquired in step S500. As an example, the CPU 1212 acquires that the number of movements from the "center" to the "pleasant" is 10, the number of movements from the "center" to the "tender" is 6, the number of movements from the "pleasant" to the "enjoyable" is 3, the number of movements from the "center" to the "regretful" is 1, the number of movements from the "pleasant" to the "want" is 1, the number of movements from the "want" to the "sad" is 1, and the number of movements from the "sad" to the "unforgivable" is 1.

In step S502, the CPU 1212 displays the movement route 920 in a highlighted manner based on the analyzed number of movements or movement frequency. Specifically, the CPU 1212 displays the movement route 920 to be bold as the number of movements increases or the movement frequency increases. As an example, the CPU 1212 displays the movement route 920 from "center" to "pleasant" having the largest number of movements to be the thickest.

In step S503, the CPU 1212 generates advice to the user 10 from the acquired history. Specifically, the CPU 1212 generates advice to the user 10 by inputting the history of the position information acquired in step S500 to the sentence generation model 1224C.

In step S504, the CPU 1212 displays the generated advice. Specifically, the CPU 1212 causes the display device 1218 to display the advice generated in step S503. Then, the CPU 1212 ends the advice display processing.

### (Screen Display)

When the above-described advice display processing is executed in the display control device 800, the CPU 1212 causes the display device 1218 to display the emotion map 900, the movement route 920 of the icon 910, and the generated advice as illustrated in Fig. 24.

Fig. 24 is a diagram schematically illustrating an example of the movement route 920 of the icon 910 and display of advice to the user 10 according to the fifth embodiment. The movement route 920 on the emotion map 900 and the advice arranged below the emotion map 900 will be described below.

First, the CPU 1212 displays the movement route 920 of the icon 910 in a highlighted manner based on the number of movements. In the present embodiment, as an example, the movement route 920 from "center" to "pleasant", which is the movement route 920 having the largest number of movements, is displayed thickest. In addition, a route from "center" to "tender", which is the route with the second largest number of movements, is displayed to be second thickest. Then, the movement route 920 from "pleasant" to "enjoyable", which is the movement route 920 having the third largest number of times of movement, is displayed to be third thickest. Furthermore, the movement routes 920 from "pleasant" to "want", from "want" to "sad", from "sad" to "unforgivable", and from "center" to "regretful", which have the fourth highest number of movements and share the same number of movements, are displayed with the fourth thickness.

Next, the CPU 1212 displays advice to the user 10 in the lower part of the emotion map 900. In the present embodiment, as an example, advice such as "<Advice for You> It is common for everyone that enjoyable feeling changes to sad feeling or regretful feeling. It is important to share emotions by talking with friends and family members and to express what you feel. Talking with someone may reduce the burden of emotion. Sometimes, you may have negative emotions, but what is important is to deal with the emotions in a constructive manner while accepting them." is displayed.

### (Summary of Fifth Embodiment)

The display control device 800 according to the fifth embodiment acquires a conversation content with the user 10, and moves the icon 910 to display it on the emotion map 900 each time the emotion value of the user 10 estimated from the conversation content changes. Therefore, according to the display control device 800 of the present embodiment, the user 10 or a third party (hereinafter, referred to as "third party") other than the user 10 can visually understand the transition of the emotion during the conversation of the user 10.

The display control device 800 of the fifth embodiment displays the movement route 920 of the icon 910 between the areas indicating the emotions arranged on the emotion map 900 on the basis of the history of the position information stored in the position information history 1224B. Therefore, according to the display control device 800 of the present embodiment, the user 10 or the third party can visually understand the characteristic of the emotion of the user 10.

The display control device 800 of the fifth embodiment displays the movement route 920 with thickening on the basis of the number of movements or the movement frequency of the icon 910 of each movement route 920 in the latest 24 hours. Therefore, according to the display control device 800 of the present embodiment, it is possible to visually understand the transition of the emotion of the user 10 in the predetermined period. Furthermore, according to the display control device 800 of the present embodiment, it is easy to visually understand the feature of the transition of the emotion of the user 10 in the predetermined period as compared with the case where the movement route 920 is not displayed to be thick.

The display device 800 of the fifth embodiment displays the advice to the user 10 generated from the history of the position information stored in the position information history 1224B side by side with the emotion map 900 on which the movement route 920 is displayed. Therefore, according to the display control device 800 of the present embodiment, the user 10 or the third party can compare and understand the characteristic of the emotion of the user 10 with the advice suitable for the characteristic of the emotion of the user 10.

The display control device 800 according to the fifth embodiment displays the icon 910 while changing the icon according to the position on the emotion map 900. Therefore, according to the display control device 800 of the present embodiment, it is easy to understand the movement of the icon 910 and the change in the emotion of the user 10 as compared with the case where the icon 910 does not change.

### (Modification of Fifth Embodiment)

In the fifth embodiment, the icon 910 indicating the position of the emotion of the user 10 is displayed on the emotion map 900. In the modification, a plurality of icons 910 indicating positions of emotions of a plurality of users 10 are displayed on the emotion map 900. In the modification, the plurality of users 10 include a user 10A, a user 10B, and a user 10C. In addition, the plurality of icons 910 include an icon 910A, an icon 910B, and an icon 910C corresponding to each user 10. Hereinafter, contents unique to the modification will be described.

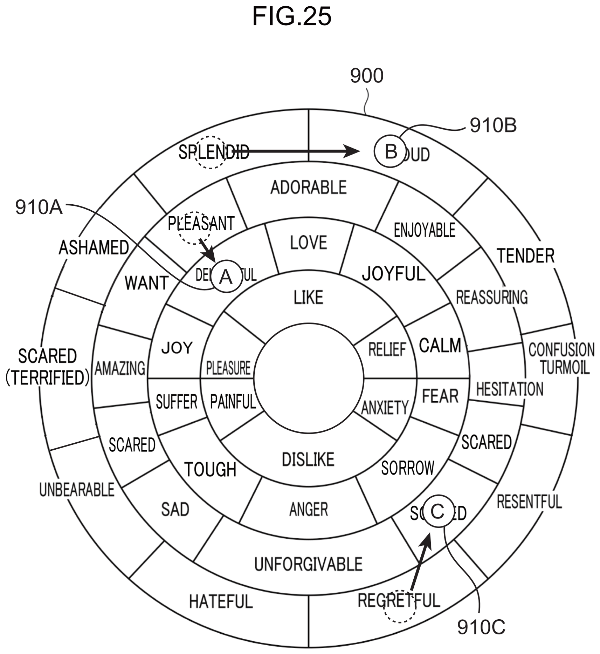

The display control unit 1212A of the modification has a function of displaying a plurality of icons 910 corresponding to a plurality of users 10 on the emotion map 900. Specifically, the display control unit 1212A displays the icons 910A, 910B, and 910C on the emotion map 900 (see Fig. 25).

In addition, the display control unit 1212A has a function of displaying each icon 910 with information for discriminating a plurality of users. As an example, the display control unit 1212A displays the name of each user 10 corresponding to the central portion of each icon 910. Note that the information attached to the icon 910 is not limited to the name, and may be a color tone, a character, an image, or the like. Furthermore, the position at which the information attached to the icon 910 is displayed is not limited to the central portion, and may be any position as long as the correspondence relationship with the icon 910 can be known.

In the position information history 1224B, information including a history of position information indicating positions of emotions of a plurality of users 10 on the emotion map 900 is stored for each user 10.

### (Flow of Control)

In the modification, the transition display processing illustrated in Fig. 21 is executed for each user 10. The transition display processing of the modification is a process repeatedly executed when the robot 100 and the users 10A, 10B, and 10C are having a conversation. Note that the conversation between the plurality of users 10 may be acquired to estimate the emotion value of each user 10.

### (Screen Display)

In the display control device 800 of the modification, when the above-described transition display processing is executed, the CPU 1212 moves and displays the icons 910A, 910B, and 910C as illustrated in Fig. 25. In addition, "A", "B", and "C", which are the names of the users 10A, 10B, and 10C, are displayed at the central portions of the icons 910A, 910B, and 910C, respectively.

As illustrated in Fig. 25, when the CPU 1212 estimates that the emotion value of the user 10A is "delightful", the CPU 1212 moves the icon 910A from the current position of "pleasant" to the position of "delightful" and displays the icon. Further, when the CPU 1212 estimates that the emotion value of the user 10B is "proud", the CPU 1212 moves the icon 910B from the current position of "splendid" to the position of "proud" and displays the icon. Then, when the CPU 1212 estimates that the emotion value of the user 10C is "sorrowful", the CPU 1212 moves the icon 910C from the current position "regretful" to the position of "sorrowful" and displays it. Note that the CPU 1212 may display each icon 910 as an icon imitating an expression while changing the expression when moving.

### (Flow of Control)

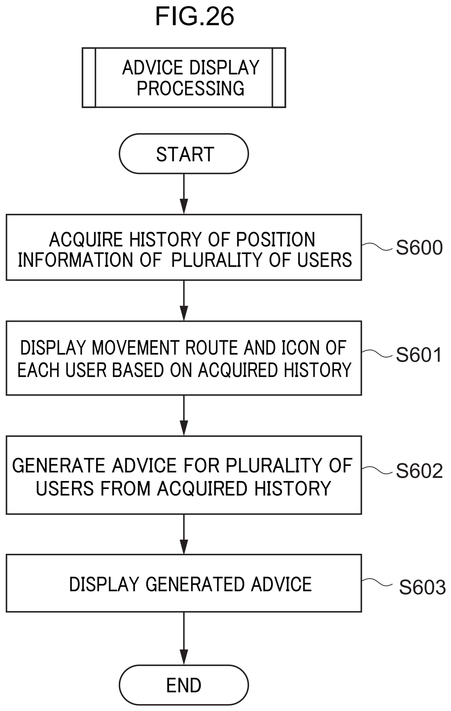

Fig. 26 is a flowchart illustrating an example of a flow of advice display processing of displaying advice to a plurality of users 10 according to the modification. As an example, the advice display processing according to the modification is a process executed in accordance with an instruction from any of the users 10.

In step S600 of Fig. 26, the CPU 1212 acquires the histories of the position information of the plurality of users 10. Specifically, the CPU 1212 acquires the histories of the position information of the users 10A, 10B, and 10C stored in the position information history 1224B (see Fig. 19). As an example, the CPU 1212 acquires a history of the position information of each user 10 stored in the last 30 minutes.

In step S601, the CPU 1212 displays the movement route 920 and the icon 910 of each user 10 based on the histories of the position information of the plurality of users 10. Specifically, the CPU 1212 causes the display device 1218 to display the movement route 920 connecting the history of the position information of each user 10 acquired in step S600 and the icon 910 corresponding to each user 10.

In step S602, the CPU 1212 generates advice to a plurality of users from the acquired history. Specifically, the CPU 1212 generates advice to the users 10A, 10B, and 10C by inputting the history of the position information acquired in step S600 to the sentence generation model 1224C. Note that the generated advice may be advice to the entire plurality of users 10 or individual advice to each user 10.

In step S603, the CPU 1212 displays the generated advice. Specifically, the CPU 1212 causes the display device 1218 to display the advice generated in step S602. Then, the CPU 1212 ends the advice display processing.

### (Screen Display)

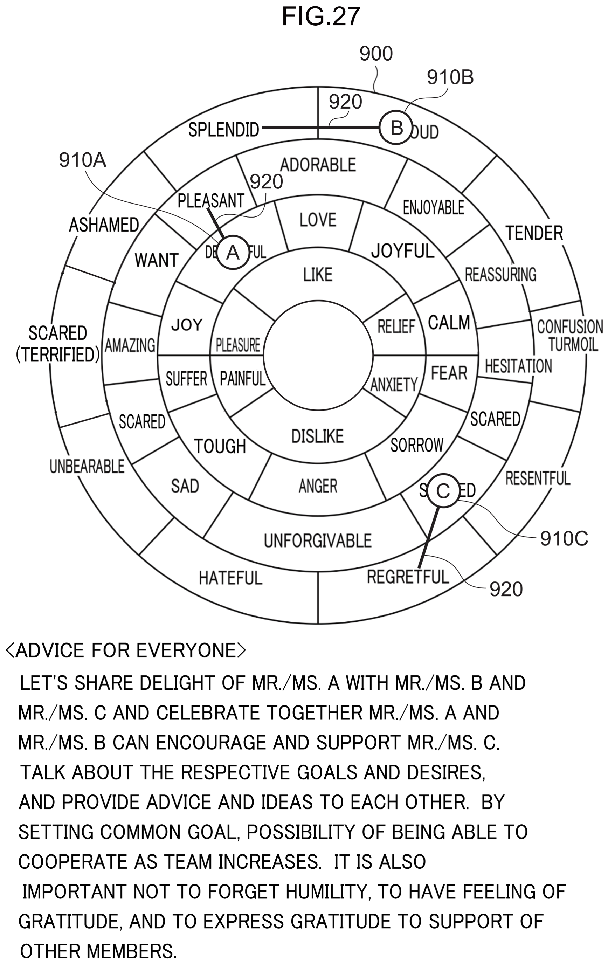

When the above-described advice display processing is executed in the display control device 800, the CPU 1212 causes the display device 1218 to display the emotion map 900, the plurality of icons 910, the movement route 920 of each icon, and the generated advice as illustrated in Fig. 27.

Fig. 27 is a diagram schematically illustrating an example of display of a plurality of icons 910, movement routes 920 of the respective icons 910, and advice for the entire plurality of users 10 according to a modification of the fifth embodiment. Hereinafter, a plurality of icons 910 on the emotion map 900, a movement route 920, and advice arranged at the bottom of the emotion map 900 will be described.

First, the CPU 1212 displays a plurality of icons 910 and a movement route 920 of each icon 910. Each icon 910 is displayed at the position of the most recently estimated emotion value of each user 10. In the modification, as an example, an icon 910A at the position of "delightful" and a movement route 920 from "pleasant" to "delightful" are displayed. In addition, the icon 910B located at the position of "proud" and the movement route 920 from "splendid" to "proud" are displayed. Then, the icon 910C at the position of "sorrowful" and the movement route 920 from "regretful" to "sorrowful" are displayed.

Then, the CPU 1212 displays advice to the plurality of users 10 in the lower part of the emotion map 900. In the modification, as an example, advice such as "<Advice for Everyone> Let's share the delight of Mr./Ms. A with Mr./Ms. B and Mr./Ms. C and celebrate together. Mr./Ms. A and Mr./Ms. B can encourage and support Mr./Ms. C. Talk about the respective goals and desires, and provide advice and ideas to each other. By setting a common goal, the possibility of being able to cooperate as a team increases. It is also important not to forget humility, to have a feeling of gratitude, and to express gratitude to the support of other members." is displayed.

### (Summary of Modification of Fifth Embodiment)

The display control device 800 according to the modification of the fifth embodiment moves the icon 910 corresponding to each user 10 and displays the icon on the emotion map 900 each time the emotion values of the plurality of users 10 change. Therefore, according to the display control device 800 of the modification, a plurality of users 10 can visually understand each other's emotions. Furthermore, according to the display control device 800 of the modification, each user 10 or a third party can understand the transition of the emotions of the plurality of users 10 from a bird's eye view.

The display control device 800 according to the modification of the fifth embodiment displays the movement routes 920 of the plurality of icons 910 between the areas indicating the emotions arranged on the emotion map 900 on the basis of the history of the position information stored in the position information history 1224B. Therefore, according to the display control device 800 of the modification, each user 10 or the third party can understand the characteristics of the emotions of the plurality of users 10 from a bird's eye view.

The display control device 800 according to the modification of the fifth embodiment displays the advice to the plurality of users 10, which is generated from the history of the position information stored in the position information history 1224B, side by side with the emotion map 900 on which the movement route 920 is displayed. Therefore, according to the display control device 800 of the modification, it is possible to compare and understand the characteristics of the emotions of the plurality of users 10 and the advice suitable for the characteristics of the emotions of the plurality of users 10.

### (Remarks)

In the fifth embodiment, the sentence generation model 1224C learns the correspondence relationship between the emotion value and the position information on the emotion map 900. However, the present invention is not limited thereto, and it is sufficient that the sentence generation model 1224C can generate a sentence with reference to the correspondence relationship between the emotion value and the position information on the emotion map 900. As an example, the sentence generation model 1224C receives information stored in the position information table 1224A as an input value.

In the fifth embodiment, the display control device 800 displays the icon 910 as an icon imitating an expression corresponding to an emotion arranged in the emotion map 900 (see Fig. 22). However, the present invention is not limited thereto, and the display control device 800 may display the icon 910 as an icon of a color set for each emotion, or may display the face image of the user 10 as an icon changed to an expression corresponding to each emotion. Furthermore, the display control device 800 may change the position at which the icon 910 is displayed in the region indicating each emotion on the emotion map 900 according to the value of the estimated emotion value. As an example, the display control unit 1212A may display the icon on the outer side of the circle as the value of the emotion value is higher.

In the fifth embodiment, when the movement route 920 of the icon 910 is displayed in a highlighted manner, the display control device 800 displays a straight line indicating the movement route 920 in a bold manner (see Fig. 24). However, the present invention is not limited thereto, and the display control device 800 may display the movement route 920 in a highlighted manner by a method such as changing the color of the line, changing the type of the line, changing the transparency of the line, or heat mapping.

In the fifth embodiment, the display control device 800 displays the movement route 920 of the icon 910 in a straight line (see Fig. 24). However, the present invention is not limited thereto, and the display control device 800 may display the movement route 920 with a curve, an arrow, other figures, or the like. Furthermore, the display control device 800 may display a round trip route between emotions of the movement route 920 in different routes.

In the fifth embodiment, the display control device 800 displays the advice to the user 10 generated by the sentence generation model 1224C of the storage device 1224 (see Fig. 24). However, the present invention is not limited thereto, and the display control device 800 may display advice to the user 10 generated by an external electronic device.

In the fifth embodiment, in the display control device 800, the emotion value of the user 10 is estimated by the estimation unit 1212C. However, the present invention is not limited thereto, and the display control device 800 may acquire the emotion value of the user 10 determined by the emotion determination unit 232 included in an external electronic device such as the robot 100, the stuffed toy 100N, and the smart glasses 720.

In the fifth embodiment, the display control device 800 acquires conversation contents in real time. However, the present invention is not limited thereto, and the display control device 800 may acquire the history of the conversation stored in the history data 222 of the external electronic device such as the robot 100, the stuffed toy 100N, and the smart glasses 720.

In the fifth embodiment, the display control device 800 acquires the conversation content and estimates the emotion value of the user 10. However, the present invention is not limited thereto, and the display control device 800 may acquire information such as a voice, an expression, a face, and a state of the user 10 during a conversation to estimate the emotion value of the user 10.

Although the disclosure has been described above with reference to the embodiments, the technical scope of the disclosure is not limited to the scope described in the embodiments. It is apparent to those skilled in the art that various modifications or improvements can be made to the above embodiments. It is apparent from the description of the claims that a mode to which such a change or improvement is added can also be included in the technical scope of the disclosure.

It should be noted that the order of execution of each processing such as operations, procedures, steps, and stages in the devices, systems, programs, and methods illustrated in the claims, the specification, and the drawings can be realized in any order unless "before", "prior to", or the like is explicitly stated, and unless the output of the previous processing is used in the later processing. Even if the operation flow in the claims, the specification, and the drawings is described using "First,", "Next,", and the like for convenience, it does not mean that it is essential to perform in this order.

All documents, including publications, patent applications and patents cited herein, are hereby incorporated by reference to the same extent as if each document were individually specifically indicated and incorporated by reference, and all of the contents thereof were set forth herein.

The use of nouns and similar referents used in connection with the description of the present disclosure (particularly in connection with the following claims) are to be construed to cover both the singular and the plural, unless otherwise indicated herein or clearly contradicted by context. The phrases "comprising," "having," "including," and "containing" are to be construed as open-ended terms (that is, meaning "including but not limited to") unless otherwise noted. Recitation of numerical ranges herein are merely intended to serve as shorthand for referring individually to each value falling within the range, unless otherwise indicated herein, and each value is incorporated into the specification as if it were individually recited herein. All methods described herein can be performed in any suitable order unless otherwise indicated herein or clearly contradicted by context. Any example or exemplary language (for example, "such as") used herein is intended merely to better illustrate the disclosure and does not pose a limitation on the scope of the disclosure unless otherwise claimed. No language in the specification should be construed as indicating any non-claimed element as essential to the practice of the disclosure.

In the specification, preferred embodiments of the disclosure are described herein, including the best mode known to the inventor for carrying out the disclosure. Variations of these preferred embodiments will be apparent to those skilled in the art upon reading the above description. The inventors expect skilled artisans to apply such variations as appropriate, and expect the present disclosure to be practiced otherwise than as specifically described herein. Accordingly, the disclosure includes all modifications and equivalents to the contents of the claims appended hereto as permitted by applicable law. Moreover, any combination of the above elements in all variations is encompassed by the present disclosure unless otherwise indicated herein or clearly contradicted by context.

## Claims

1. An action control system comprising:
an emotion determination unit that determines an emotion of a user or an emotion of an electronic device; and
an action determination unit that determines an action of the electronic device using the emotion of the user or the emotion of the electronic device and an action determination model, wherein
the emotion determination unit determines the emotion of the user or the emotion of the electronic device according to a predetermined mapping.

2. The action control system according to claim 1, further comprising:
an emotion estimation unit that estimates a tendency of the emotion of the user on the basis of a transition of the emotion of the user determined by the emotion determination unit, wherein
the action determination unit determines an action of the electronic device by further using the tendency of the emotion of the user estimated by the emotion estimation unit.

3. The action control system according to claim 2, wherein the emotion estimation unit uses a learning model that is trained on transition of the emotion of the user to estimate a tendency of the emotion of the user from position information in which the emotion of the user determined by the emotion determination unit is mapped on an emotion map.

4. The action control system according to claim 1, wherein the action determination unit determines, as an action of the electronic device, a backchanneling response or a gesture determined in advance according to the emotion of the user or the emotion of the electronic device.

5. The action control system according to claim 4, further comprising
a state recognition unit that recognizes a user state including a behavior of the user, wherein
the action determination unit
determines the action of the electronic device as an action corresponding to the behavior of the user using the emotion of the user, the emotion of the electronic device, or the user state, and the action determination model, and
determines the backchanneling response or the gesture as a preliminary action to be performed by the electronic device during a period from when the emotion of the user or the emotion of the electronic device is determined until the action of the electronic device determined as the action corresponding to the behavior of the user is started to be executed.

6. The action control system according to claim 1, wherein the electronic device is a robot.

7. The action control system according to claim 6, wherein
the action determination model is a sentence generation model having an interaction function, and
the action determination unit inputs a text indicating the emotion of the user or the emotion of the robot and a text for inquiry about the action of the robot to the sentence generation model, and determines the action of the robot on the basis of an output of the sentence generation model.

8. The action control system according to claim 6 or 7, wherein the robot is mounted on a stuffed toy or is connected to a control target device mounted on the stuffed toy in a wireless or wired manner.

9. The action control system according to claim 6 or 7, wherein the robot is an agent for interacting with the user.

10. An action control system comprising:
an emotion determination unit that determines an emotion of a user or an emotion of a robot; and
an action determination unit that generates an action content of a robot for the behavior of the user and the emotion of the user or the emotion of the robot on the basis of an interaction function that causes the robot to interact with the user, and determines an action of the robot corresponding to the action content, wherein
the emotion determination unit determines the emotion of the user according to predetermined mapping.

11. A method for generating learning data to be used for training of a learning model for estimating a tendency of an emotion of the user, the method comprising:
determining an emotion of the user; and
storing a transition of the determined emotion of the user as vector information indicating a change in position information in which the emotion of the user is mapped on an emotion map.

12. A display control device that causes a display device to display an emotion map to which a plurality of emotions are mapped and one or a plurality of predetermined markers indicating a position of an emotion of one or a plurality of users on the emotion map, the display control device comprising:
an acquisition unit that acquires information of an interaction with the one or the plurality of users;
an estimation unit that estimates the emotion of the one or the plurality of users from the information; and
a display control unit that causes the one or the plurality of predetermined markers to transition among the plurality of emotions on the basis of a change in the emotions of the one or the plurality of users and displays the predetermined markers on the emotion map.

13. The display control device according to claim 12, wherein
the display control unit displays a past transition trajectory of the one or the plurality of predetermined markers among the plurality of emotions on the emotion map on the basis of a history of the change of the emotions in the one or the plurality of the users.

14. The display control device according to claim 13, wherein
the display control unit displays the trajectory in a highlighted manner on the basis of the number of times or frequency of the transitions in a predetermined period.

15. The display control device according to claim 13, wherein
the display control unit displays advice to the one or the plurality of users on the basis of a past transition of the one or the plurality of predetermined markers side by side with the emotion map.

16. The display control device according to claim 12, wherein
the predetermined marker is an icon that is changed and displayed according to a position on the emotion map.

17. A program for causing a computer to function as the display control device according to any one of claims 12 to 16.
